# EUROPEAN PATENT APPLICATION

(11) **EP 2 653 618 A1**
(43) Date of publication of application: **23.10.2013**
(21) Application number: 11848064.9
(22) Date of filing: 08.12.2011
(51) Int. Cl.: E02F 9/00, B60K 11/04

(54) **EXTERIOR COVER FOR CONSTRUCTION MACHINE**

(30) Priority: 15.12.2010 JP 2010279194
(71) Applicant: Hitachi Construction Machinery Co., Ltd., Bunkyo-ku Tokyo 112-0004 (JP)
(72) Inventor: KOBAYASHI Tamio, Tsuchiura-shi Ibaraki 300-0013 (JP); ISOBE Hiroyuki, Tsuchiura-shi Ibaraki 300-0013 (JP); MANO Hidenori, Tsuchiura-shi Ibaraki 300-0013 (JP); SAITO Yutaka, Tsuchiura-shi Ibaraki 300-0013 (JP)
(74) Representative: MERH-IP Matias Erny Reichl Hoffmann
(86) International application number: PCT/JP2011/078440
(87) International publication number: WO 2012/081496

(57) **Abstract**

An exterior cover (14) is provided on an upper revolving structure (3) in order to cover onboard equipment such as an engine (8), a heat exchanger (9) and the like mounted on the upper revolving structure (3) of a hydraulic excavator (1). A left rear door cover (21) constituting this exterior cover (14) is composed of a cover body (22) in which openings (22C), (22D) and a grill (22E) are provided, a plate mounting front bracket (27) and a plate mounting rear bracket (28) fixed to an inner surface (22F) of the cover body (22), and an air flow plate (29) detachably mounted on each of these brackets (27, 28). As a result, the common air flow plate (29) can be mounted on the cover body (22) of the left rear door cover (21) of the subtropical zone specification and a cover body (32) of a left rear door cover (21) of the tropical zone specification.

## Description

### TECHNICAL FIELD

The present invention relates to an exterior cover for a construction machine, used in the construction machine such as a hydraulic excavator, a hydraulic crane, a wheel loader and the like, for example, and covering onboard equipment mounted on a vehicle body.

### BACKGROUND ART

In general, a vehicle body of a hydraulic excavator as a typical example of a construction machine is formed of an automotive lower traveling structure and an upper revolving structure that is swingably mounted on the lower traveling structure. On the front part of the upper revolving structure, a working mechanism for performing an excavating work of earth and sand and the like is provided capable of moving upward/downward.

The upper revolving structure is formed of a revolving frame which becomes a base, a cab that is provided on a left front part of the revolving frame, a counterweight disposed on a rear end part of the revolving frame, an engine located on the front side of the counterweight and mounted on the revolving frame, onboard equipment such as a hydraulic pump, a heat exchanger and the like, and an exterior cover disposed on the front side of the counterweight and covering the onboard equipment.

In this case, the exterior cover is composed of a top cover, a left side cover, a right side cover and the like, for example. The side covers are door covers usually capable of being opened/closed for performing an inspection work of the onboard equipment. In this door cover, a large number of air flow holes are usually formed so that the outside air sucked into the exterior cover through the air flow holes is supplied to the onboard equipment as cooling air (Patent Document 1).

Thus, a large number of air flow holes need to be provided in the door cover of a hydraulic excavator used in a tropical zone in order to supply a large quantity of cooling air to the onboard equipment, and there is a problem that rigidity of the door cover itself deteriorates.

In order to deal with this problem, a door cover composed of an outer side plate in which an air flow hole collection portion where a large number of air flow holes collect is provided and an inner side plate on which a plurality of openings for air flow corresponding to this air flow hole collection portion on the outer side plate are formed is proposed as another conventional art door cover. This door cover can improve the entire rigidity by reinforcing the outer side plate in which a large number of air flow holes are formed by the inner side plate (Patent Document 2).

### PRIOR ART DOCUMENTS

### PATENT DOCUMENTS

- Patent Document 1:: Japanese Patent Laid-Open No. 2005-282239 A
- Patent Document 2:: Japanese Patent Laid-Open No. 2009-84844 A

### SUMMARY OF THE INVENTION

The number of air flow holes provided in the door cover of the hydraulic excavator differs between a case used in a tropical zone and a case used in a subtropical zone, for example, and it is necessary to form air flow holes on the door cover of a tropical zone specification more than those on the door cover of a subtropical zone specification. Thus, in manufacture of a hydraulic excavator, a plurality of types of door covers with different number of air flow holes are prepared, and those suitable for the weather of an area where the hydraulic excavator will operate and the like are selected and mounted.

However, the above-described door cover according to Patent Document 2 is composed of an outer side plate in which a plurality of air flow hole collection portions are formed and an inner side plate in which a plurality of openings for air flow corresponding to each of the air flow hole collection portions are formed. Thus, if the door cover of the tropical zone specification is to be manufactured, both the outer side plate and the inner side plate of the tropical zone specification are needed. On the other hand, if the door cover of the subtropical zone specification is to be manufactured, both the outer side plate and the inner side plate of the subtropical zone specification are needed. As a result, the number of components increases in order to manufacture a plurality of types of door covers, which leads to a problem that a manufacturing cost of door covers increases.

The door cover according to Patent Document 2 is configured such that the inner side plate is fixed to the outer side plate by using hemming or an adhesive. Thus, a heavy-weighted door cover in which the outer side plate and the inner side plate are integrated should be mounted on the upper revolving structure, which leads to a problem that workability in mounting of the door cover deteriorates.

In view of the above-discussed problems with the conventional art, it is an object of the present invention to provide an exterior cover for a construction machine capable of improving rigidity of the cover in which an air flow hole is provided and components can be made common in manufacture of a plurality of types of covers.

(1) In order to solve the above-described problems, the present invention is applied to an exterior cover for a construction machine, provided with a cover body provided on a vehicle body of the construction machine in order to cover onboard equipment including an engine mounted on the vehicle body and a plurality of openings provided in the cover body so that cooling air flows between the inside and the outside of the cover body.

A characteristic of a configuration adapted by the present invention is that a plate mounting bracket arranged on an inner surface located on the onboard equipment side of the cover body and an air flow plate formed of a plate body in which a large number of air flow holes are bored and arranged in a state covering each of the openings of the cover body by being detachably mounted on the plate mounting bracket.

With this arrangement, by mounting the air flow plate having a large number of air flow holes on the plate mounting bracket provided on the cover body having openings, an exterior cover having a double structure in which the cover body and the air flow plate made of separate members are combined can be formed. Thus, the cover body in which the opening is formed can be reinforced by the air flow plate mounted on the plate mounting bracket of the cover body, and rigidity of the entire exterior cover can be improved.

Moreover, by mounting the common air flow plate on the plurality of types of cover bodies each having different number of openings and shape by using the plate mounting bracket, a plurality of types of the exterior covers can be manufactured. Thus, since the air flow plate can be made common when the plurality of types of exterior covers are manufactured, the number of components can be decreased, and the manufacturing cost of the exterior cover can be reduced.

(2) According to the present invention, it is configured such that the plate mounting brackets are provided on the both sides sandwiching each of the openings on an inner surface of the cover body, the air flow plate is mounted on each of these plate mounting brackets, respectively, and the cover body is reinforced by each of the plate mounting brackets and the air flow plate.

With this arrangement, by mounting the air flow plate on the plate mounting brackets provided on the both sides sandwiching the openings of the cover body, the cover body, each of the plate mounting brackets, and the air flow plate form a closed sectional structure. As a result, the peripheries of the openings in the cover body can be reinforced in a concentrated manner, and rigidity of the entire exterior cover can be further improved.

(3) According to the present invention, it is configured such that a reinforcement member is provided in the cover body on both end portions sandwiching each of the openings and along an inner surface of the cover body and each of the plate mounting brackets is provided by being juxtaposed between each of the reinforcement members and each of the openings. As a result, rigidity of the cover body in which the opening is formed can be further improved.

(4) According to the present invention, it is configured such that each of the openings is arranged by being juxtaposed in the up-and-down direction, each of the plate mounting brackets is provided so as to extend in the up-and-down direction on the both sides sandwiching each of the openings, a plurality of mounting tools are provided in the up-and-down direction on each of the plate mounting brackets, and a plurality of engaged portions to be engaged with each of the mounting tools are provided on the air flow plate.

With this arrangement, by engaging each of the engaged portions of the air flow plate with the mounting tool provided on the plate mounting bracket, only the light-weighted cover body is mounted on the vehicle body in advance. After that, the air flow plate is mounted on the plate mounting bracket of the cover body so as to form the exterior cover. As described above, since the air flow plate can be mounted on the cover body mounted on the vehicle body afterward, workability when mounting the exterior cover on the vehicle body can be improved.

(5) According to the present invention, a bend portion for improving rigidity of the air flow plate can be provided on the air flow plate. By providing the bend portion on the air flow plate as above, rigidity of the air flow plate itself can be improved, and by reinforcing the cover body by this air flow plate, rigidity of the entire exterior cover can be further improved.

(6) According to the present invention, it is configured such that a plurality of types of the cover bodies having different numbers of openings and/or shapes are prepared; and the air flow plate is formed by one type of the air flow plate common to the plurality of types of the cover bodies.

With this arrangement, by mounting the one type of common air flow plate on the plurality of types of cover bodies having different numbers of openings and shapes, the plurality of types of the exterior covers can be formed. Thus, if the plurality of types of exterior covers is to be formed in accordance with the weather and the like of an area where the construction machine is to operate, the air flow plate can be made common regardless of the type of the cover body. Therefore, the number of components can be decreased, and the manufacturing cost of the exterior cover can be reduced.

(7) According to the present invention, the air flow plate is composed of a single plate body singularly covering each of the openings provided in the cover body or a plurality of plate bodies divided into upper and lower parts.

With this arrangement, if the air flow plate made of a single plate body for covering the opening of the cover body is used, the number of components of the exterior cover can be decreased as much as possible. On the other hand, the air flow plate made of a plurality of plate bodies divided into upper and lower parts for covering the opening in the cover body can be used. In this case, the lower opening in each of the openings of the cover body can be covered by one air flow plate and the upper opening can be covered by another air flow plate. As a result, a portion where the opening is not formed in the cover body does not have to be wastefully covered by the air flow plate but the entire area of the air flow plate can be made required minimum. As a result, the weight of the exterior cover formed of the cover body and the air flow plate can be reduced.

(8) According to the present invention, the cover body is composed of one type of the cover body for which the number of the openings is prescribed; and the air flow plate is composed of a plurality of types of the air flow plates, that is, one air flow plate in which the air flow holes are formed only within a range corresponding to a part of the openings in all the openings of the cover body and another air flow plate in which the air flow holes are formed within a range corresponding to all the openings of the cover body.

With this arrangement, when the one air flow plate is mounted on the cover body, cooling air can flow through the air flow holes provided only within the range corresponding to a part of the openings in the openings provided in the cover body. On the other hand, if another air flow plate is mounted on the cover body, the cooling air can flow through the air flow hole provided within the range corresponding to all the openings provided in the cover body. As described above, by selecting and mounting the plurality of types of the air flow plates having different ranges (areas) where the air flow holes are provided on one type of the cover body for which the number of openings is prescribed, the plurality of types of the exterior covers can be formed. Therefore, even if the plurality of types of the exterior covers are to be formed in accordance with the weather and the like of an area where the construction machine is to operate, the manufacturing cost of the exterior cover can be reduced by making the cover body common.

(9) According to the present invention, the cover body is composed of one type of the cover body for which the number of the openings is prescribed; the air flow plate is composed of one type of the air flow plate in which the air flow holes are formed within a range corresponding to all the openings of the cover body; and a closing plate made of a member different from the air flow plate and closing a part of the openings in the openings is selectively mounted on the cover body.

With this arrangement, if the air flow plate is mounted in a state where the closing plate is mounted on the cover body, cooling air can be made to flow through the opening not closed by the closing plate and the air flow hole of the air flow plate. On the other hand, if only the air flow plate is mounted in a state where the closing plate is not mounted on the cover body, cooling air can be made to flow through all the openings provided in the cover body and the air flow hole of the air flow plates. As described above, by making the cover body and the air flow plate mounted on the cover body in common use and by selectively mounting the closing plate on the cover body, a plurality of types of the exterior covers can be formed. As a result, when forming a plurality of types of the exterior covers in accordance with the weather or the like of an area where the construction machine is to operate, the cover body and the air flow plate can be made common, and the manufacturing cost of the exterior cover can be further reduced.

### BRIEF DESCRIPTION OF THE DRAWINGS

Fig. 1 is a front view illustrating a hydraulic excavator in which a first embodiment of an exterior cover according to the present invention is applied to a left rear door cover.
Fig. 2 is a perspective view illustrating a state where a left front door cover and the left rear door cover are open.
Fig. 3 is a perspective view illustrating a state where the left rear door cover is mounted on a revolving frame.
Fig. 4 is a perspective view illustrating the left rear door cover of a subtropical zone specification from outside.
Fig. 5 is an exploded perspective view illustrating a cover body and an air flow plate of the subtropical zone specification from inside.
Fig. 6 is a perspective view illustrating a reinforcement member as a single unit.
Figs. 7 are perspective views illustrating a manufacturing process of a plate mounting bracket, in which Fig. 7(A) is a perspective view illustrating two bracket materials, Fig. 7(B) is a perspective view illustrating a process of fixing a bolt to the two bracket materials, and Fig. 7(C) is a perspective view illustrating a plate mounting front bracket and a plate mounting rear bracket before and after manufacture.
Fig. 8 is a perspective view illustrating the air flow plate as a single unit.
Fig. 9 is a front view illustrating a hydraulic excavator provided with the left rear door cover of a tropical zone specification.
Fig. 10 is a perspective view illustrating the left rear door cover of the tropical zone specification from outside.
Fig. 11 is an exploded perspective view illustrating a cover body and an air flow plate of the tropical zone specification from inside.
Fig. 12 is a perspective view of the left rear door cover of the subtropical zone specification according to a second embodiment from outside.
Fig. 13 is an exploded perspective view illustrating a cover body and an air flow plate of the subtropical zone specification from inside.
Fig. 14 is a perspective view illustrating the air flow plate as a single unit.
Fig. 15 is a perspective view illustrating the left rear door cover of the tropical zone specification from outside.
Fig. 16 is an exploded perspective view illustrating the cover body and the air flow plate of the tropical zone specification from inside.
Fig. 17 is an exploded perspective view illustrating a cover body, a lower air flow plate, and an upper air flow plate constituting the left rear door cover of the subtropical zone specification according to a third embodiment from inside.
Fig. 18 is a perspective view illustrating the upper air flow plate as a single unit.
Fig. 19 is an exploded perspective view illustrating the cover body, the lower air flow plate, and the upper air flow plate constituting the left rear door cover of the tropical zone specification from inside.
Fig. 20 is an exploded perspective view illustrating a cover body and an air flow plate of the subtropical zone specification according to a fourth embodiment from inside.
Figs. 21 are perspective views illustrating a manufacturing process of a plate mounting front bracket used in the fourth embodiment, in which Fig. 21 (A) is a perspective view illustrating a bracket material, Fig. 21(B) is a perspective view illustrating a process of fixing a bolt to the bracket material, and Fig. 21 (C) is a perspective view illustrating a manufactured plate mounting front bracket.
Fig. 22 is a perspective view illustrating a left rear door cover of the subtropical zone specification according to a fifth embodiment from outside.
Fig. 23 is an exploded perspective view illustrating a cover body and an air flow plate of the subtropical zone specification from inside.
Fig. 24 is a perspective view illustrating the air flow plate of the subtropical zone specification as a single unit.
Fig. 25 is a perspective view illustrating the left rear door cover of the tropical zone specification from outside.
Fig. 26 is an exploded perspective view illustrating the cover body and the air flow plate of the tropical zone specification from inside.
Fig. 27 is a perspective view illustrating the air flow plate of the tropical zone specification as a single unit.
Fig. 28 is a perspective view illustrating a left rear door cover of the subtropical zone specification according to a sixth embodiment from outside.
Fig. 29 is an exploded perspective view illustrating a state where a closing plate is mounted on a cover body from inside.
Fig. 30 is an exploded perspective view illustrating a state where an air flow plate is mounted on the cover body on which the closing plate is mounted from inside.
Fig. 31 is a perspective view illustrating the left rear door cover of the tropical zone specification from outside.
Fig. 32 is an exploded perspective view illustrating the left rear door cover of the tropical zone specification in which the air flow plate is mounted on the cover body from inside.

### MODE FOR CARRYING OUT THE INVENTION

Hereafter, embodiments of an exterior cover for a construction machine according to the present invention will be explained in detail with reference to the accompanying drawings by taking a case in which an application to a left rear door cover of a hydraulic excavator as an example.

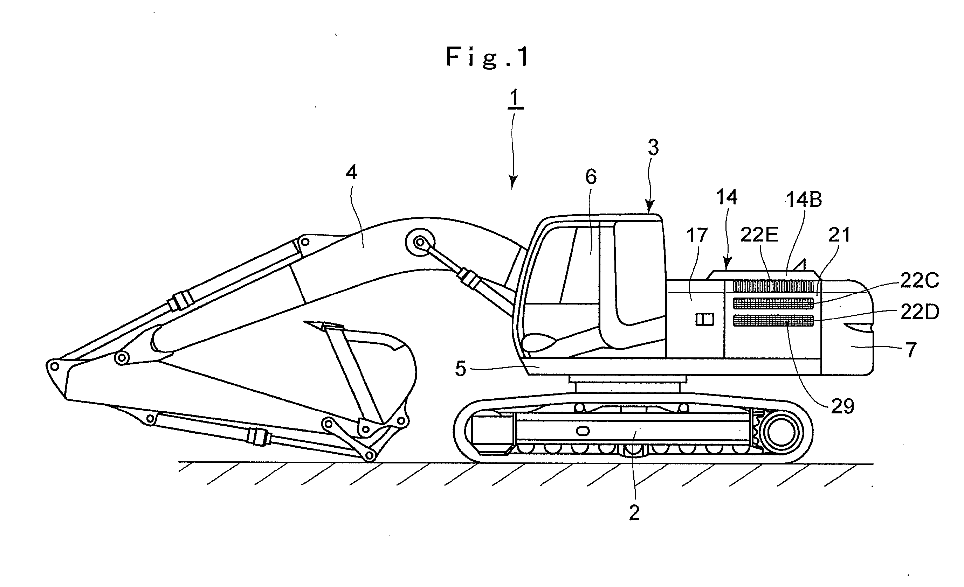

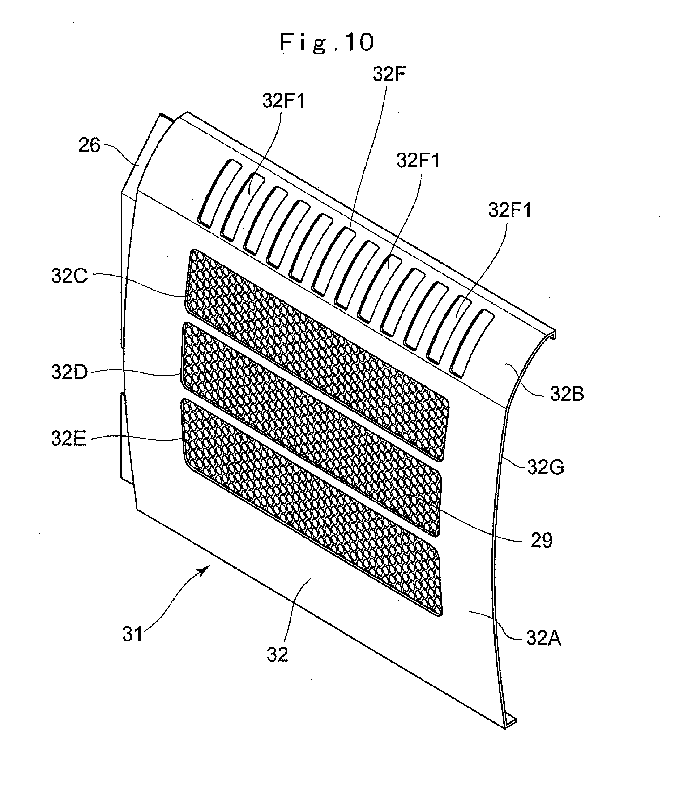

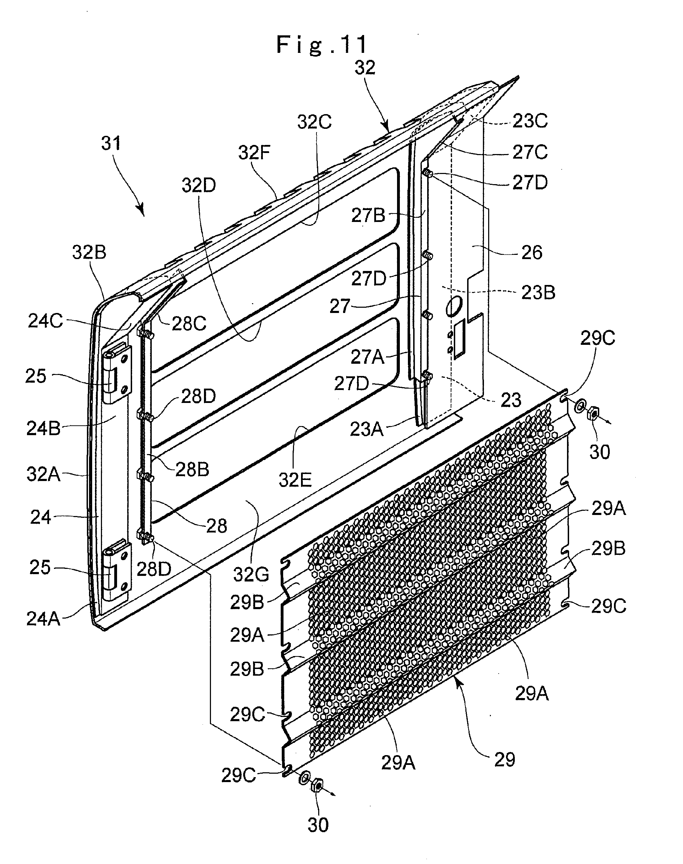

Figs. 1 to 11 illustrate the exterior cover for a construction machine according to a first embodiment of the present invention. In the figures, designated at 1 is a hydraulic excavator as a typical example of the construction machine. A vehicle body of the hydraulic excavator 1 includes an automotive crawler-type lower traveling structure 2 and an upper revolving structure 3 that is swingably mounted on the lower traveling structure 2. On a front part side of the upper revolving structure 3, a working mechanism 4 for performing an excavating work of earth and sand is provided capable of moving upward/downward. The upper revolving structure 3 includes a revolving frame 5, a cab 6, a counterweight 7, an engine 8, an exterior cover 14 and the like, which will be described later.

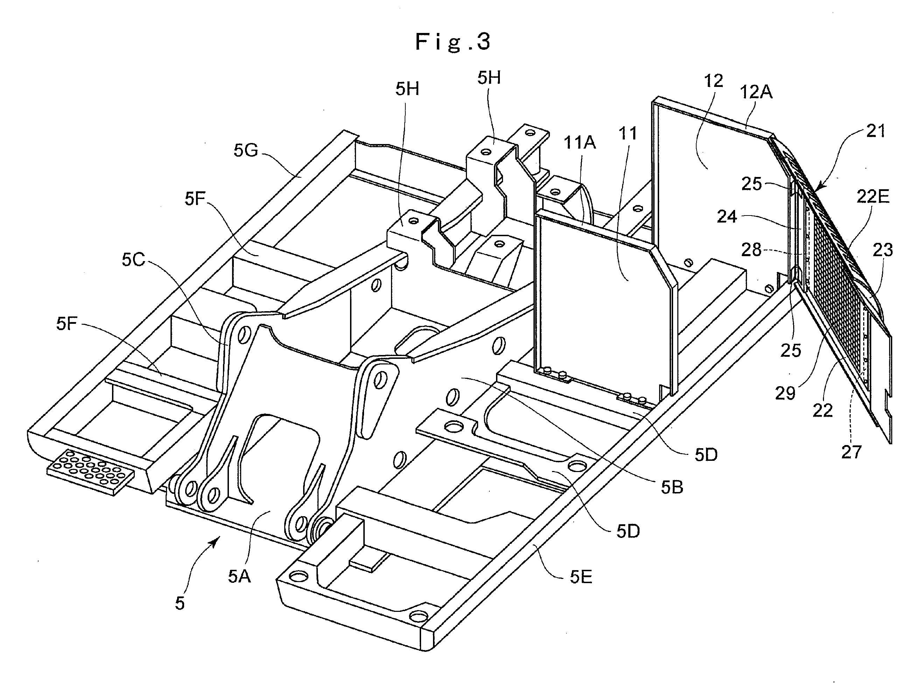

Indicated at 5 is a revolving frame which becomes a base for the upper revolving structure 3, and the revolving frame 5 constitutes a support structural body for the upper revolving structure 3. As illustrated in Fig. 3, the revolving frame 5 includes a bottom plate 5A formed of a thick steel plate and extending in the front-and-rear direction, a left vertical plate 5B and a right vertical plate 5C installed upright on the bottom plate 5A and extending in the front-and-rear direction, a left side frame 5E connected to the bottom plate 5A and the left vertical plate 5B through a plurality of extension beams 5D and extending in the front-and-rear direction, and a right side frame 5G connected to the bottom plate 5A and the right vertical plate 5C through a plurality of extension beams 5F and extending in the front-and-rear direction.

On front end portions of the left and right vertical plates 5B and 5C constituting the revolving frame 5, a base end side of the working mechanism 4 is swingably mounted. On rear end portions of the left and right vertical plates 5B and 5C, the counterweight 7 which will be described later is mounted. On the other hand, an engine support bracket 5H is provided on a rear end side between the left and right vertical plates 5B and 5C, and the engine 8 which will be described later is configured to be mounted on the engine support bracket 5H.

The cab 6 is disposed on the front left side of the revolving frame 5, and the cab 6 defines an operator's cab in which an operator gets on board. Inside the cab 6, an operator's seat on which the operator is seated, various operation levers operated by the operator and the like (none of them is shown) are disposed.

On the rear end side of the revolving frame 5, the counterweight 7 is provided. The counterweight 7 is mounted on the rear end portions of the left and right vertical plates 5B and 5C constituting the revolving frame 5 and achieves a weight balance with the working mechanism 4.

Indicated at 8 is an engine as onboard equipment located on the front side of the counterweight 7 and mounted on the revolving frame 5. The engine 8 is mounted on the engine support bracket 5H of the revolving frame 5 in a laterally placed state extending in the right-and-left direction. The engine 8 drives a hydraulic pump (not shown), and the hydraulic pump is driven by the engine 8, whereby pressurized oil for operation is discharged to various hydraulic actuators mounted on the hydraulic excavator 1.

Indicated at 9 is a heat exchanger located on the left side of the engine 8 and as onboard equipment mounted on the revolving frame 5. The heat exchanger 9 is composed of a support frame 10 which will be described later and various heat exchangers supported by the support frame 10 (a radiator for cooling engine coolant, an oil cooler for cooling operating oil and the like, for example).

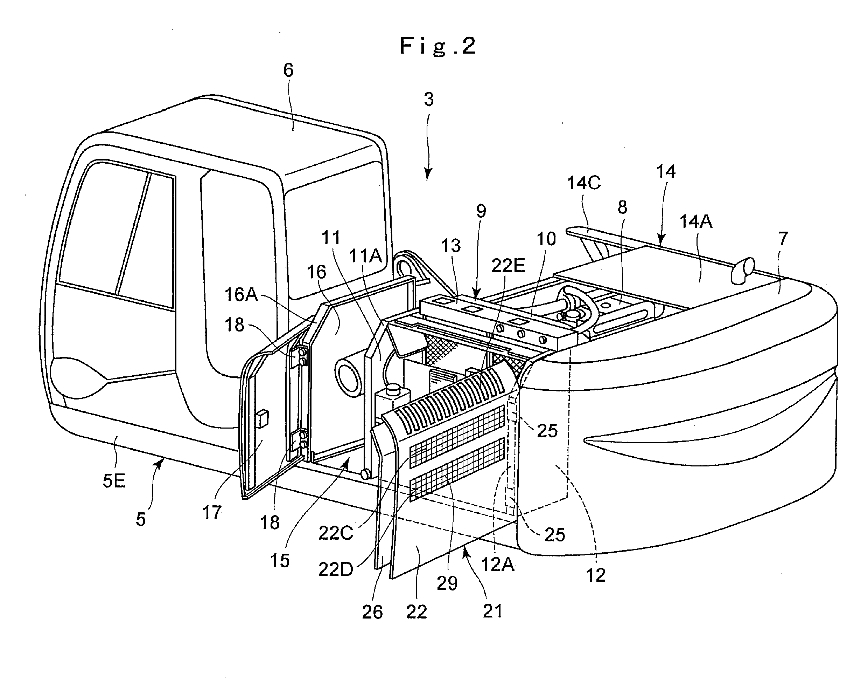

The support frame 10 becomes a base for the heat exchanger 9, and the support frame 10 is located on the front left side of the counterweight 7 and is mounted on the extension beam 5D of the revolving frame 5 and integrally supports various heat exchangers. As illustrated in Fig. 2, this support frame 10 is made of a rectangular plate body and includes a front support member 11 located between the cab 6 and the counterweight 7 and installed upright on the revolving frame 5, a rear support member 12 made of a rectangular plate body substantially equal to the front support member 11 and installed upright on the revolving frame 5 spaced apart rearward from the front support member 11, and a connecting member 13 connecting upper end portions of the front support member 11 and the rear support member 12 to each other.

Here, the left end side of the front support member 11 becomes a flange portion 11A bent in the front-and-rear direction. On the other hand, the left end side of the rear support member 12 is also a flange portion 12A bent in the front-and-rear direction, and the rear end side of a left rear door cover 21 which will be described later is supported by the flange portion 12A.

The exterior cover 14 is located on the front side of the counterweight 7 and is provided on the revolving frame 5, and the exterior cover 14 covers the onboard equipment such as the engine 8 and the heat exchanger 9 and the like which are mounted on the revolving frame 5. Here, the exterior cover 14 includes a top cover 14A covering the onboard equipment from above, an engine cover 14B (See Fig. 1) protruding upward from the top cover 14A and covering the upper part of the onboard equipment capable of being opened/closed, a right door cover 14C covering the onboard equipment from right side capable of being opened/closed, a left front door cover 17 which will be described later, and a left rear door cover 21.

A utility room 15 is located on the rear side of the cab 6 and is formed in the exterior cover 14. As illustrated in Fig. 2, this utility room 15 is defined by the front support member 11 of the support frame 10 constituting the heat exchanger 9, a front partition plate 16 which will be described later, and the left front door cover 17 which will be described later. The utility room 15 accommodates a grease gun, tool (none of them is shown) and the like, for example, and is opened/closed by the left front door cover 17.

The front partition plate 16 is provided on the rear side of the cab 6, and the front partition plate 16 is formed as a rectangular plate body substantially equal to the front support member 11 of the support frame 10. This front partition plate 16 is installed upright on the revolving frame 5 in a state opposite to the rear surface of the cab 6 and the front support member 11 and partitions a space between the cab 6 and the exterior cover 14, while the front partition plate 16 defines the utility room 15 between itself and the front support member 11. The left end side of the front partition plate 16 becomes a flange portion 16A bent in the front-and-rear direction, and the left front door cover 17 which will be described later is configured to be mounted on the flange portion 16A.

The left front door cover 17 is mounted on the front partition plate 16 capable of being opened/closed, and the left front door cover 17 constitutes the left side face of the exterior cover 14 together with the left rear door cover 21 which will be described later. The left front door cover 17 is formed having a rectangular flat plate shape as a whole by use of a steel plate material or the like, for example, and the base end side (front end side) of the left front door cover 17 is supported by the flange portion 16A of the front partition plate 16 through upper and lower hinge members 18. The left front door cover 17 opens/closes the utility room 15 by rotating around the hinge members 18.

Subsequently, a case in which a first embodiment of the exterior cover according to the present invention is applied to the left rear door cover of the subtropical zone specification will be described.

Designated at 21 is the left rear door cover provided capable of being opened/closed on the rear support member 12 constituting the support frame 10 of the heat exchanger 9. The left rear door cover 21 is mounted on the hydraulic excavator 1 operating in the subtropical zone, for example, and two openings 22C and 22D and a grill 22E are formed in a cover body 22 which will be described later.

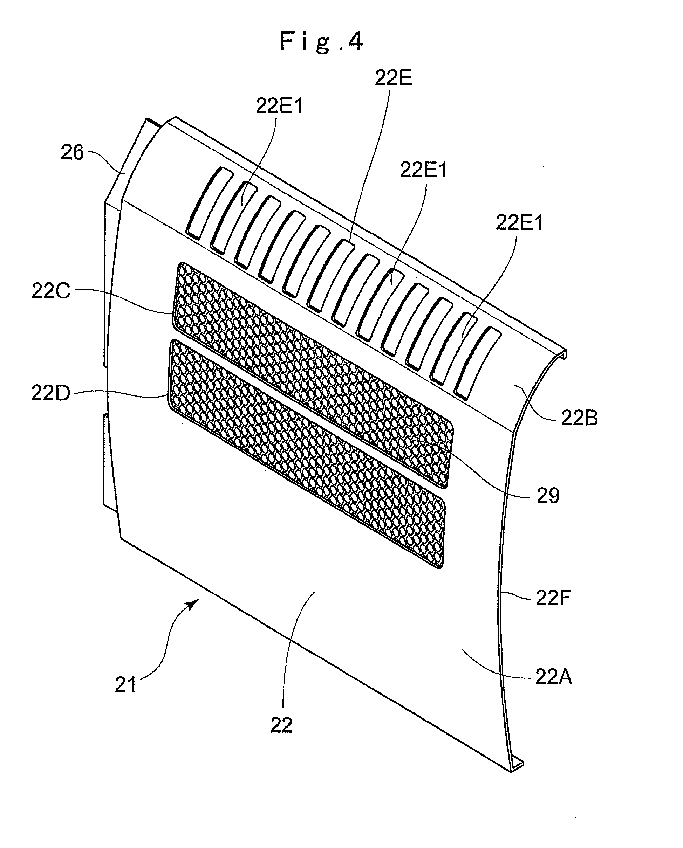

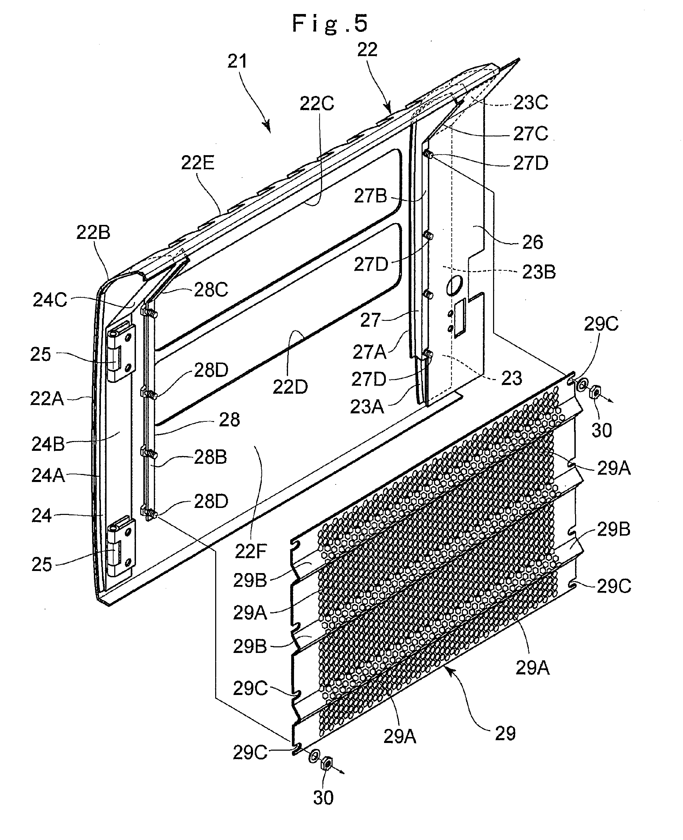

The left rear door cover 21 is arranged adjacent to the rear side of the left front door cover 17 and is mounted capable of being opened/closed on the rear support member 12 constituting the support frame 10 of the heat exchanger 9. This left rear door cover 21 is opened/closed during maintenance works including maintenance, inspection and the like for the heat exchanger 9 accommodated in the exterior cover 14. Here, as illustrated in Figs. 4 and 5, the left rear door cover 21 is largely constituted by the cover body 22 which will be described later, a plate mounting front bracket 27, a plate mounting rear bracket 28, and an air flow plate 29.

Indicated at 22 is a cover body which becomes a base for the left rear door cover 21. The cover body 22 is formed having a rectangular plate shape extending in the front-and-rear direction using a steel plate material or the like and rises upward from the left side frame 5E of the revolving frame 5. Here, the cover body 22 includes a side plate section 22A opposed to the heat exchanger 9 in the right-and-left direction and extending in the front-and-rear direction and a curved plate section 22B having an arc shape extending diagonally upward from the upper end side of the side plate section 22A to the heat exchanger 9 side.

In the side plate section 22A of the cover body 22, the two openings 22C and 22D each having a rectangular shape are formed by being juxtaposed in the up-and-down direction. In the curved plate section 22B of the cover body 22, the grill 22E in which a large number of small rectangular holes 22E1 extending in the up-and-down direction are juxtaposed in a matrix state in the front-and-rear direction is formed. Therefore, it is configured such that, if a cooling fan (not shown) is rotated by operation of the engine 8, the outside air is sucked into the exterior cover 14 through the openings 22C and 22D and the grill 22E of the cover body 22 so as to cool the heat exchanger 9 and the like. Moreover, on an inner surface 22F located on the side of the onboard equipment such as the engine 8, the heat exchanger 9 and the like in the cover body 22, a front reinforcement member 23, a rear reinforcement member 24, a flange plate 26, the plate mounting front bracket 27, and the plate mounting rear bracket 28 which will be described later are fixed.

Indicated at 23 is the front reinforcement member provided on the end portion on the front side in the front-and-rear direction of the cover body 22. Designated at 24 is the rear reinforcement member provided on the end portion on the rear side in the front-and-rear direction of the cover body 22. These front reinforcement member 23 and rear reinforcement member 24 are arranged sandwiching the openings 22C and 22D and the grill 22E and fixed to the inner surface 22F of the cover body 22 in a state extending in the up-and-down direction along the cover body 22 so as to improve rigidity of the cover body 22.

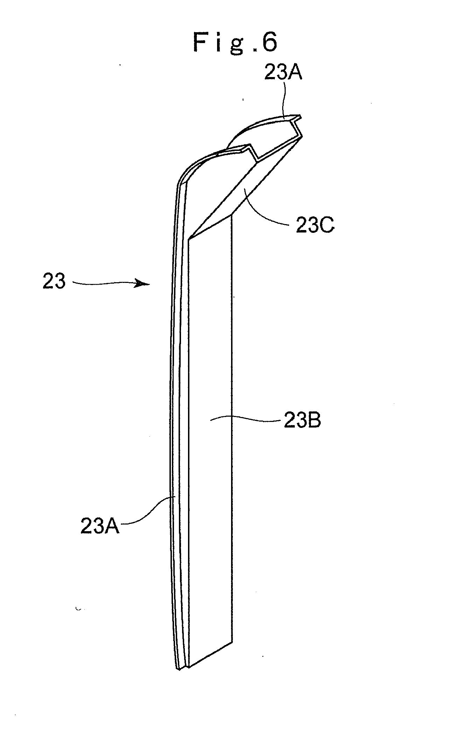

Here, as illustrated in Fig. 6, the front reinforcement member 23 is formed into a hollow columnar shape having a U-shaped section and extending in the up-and-down direction by applying bending machining to a steel plate material. This front reinforcement member 23 includes a joint surface area 23A in contact with the inner surface 22F of the cover body 22, a vertical surface area 23B opposed to the side plate section 22A of the cover body 22 and extending in the vertical direction, and an inclined surface area 23C extending diagonally upward from the upper end side of the vertical surface area 23B while being opposed to the curved plate section 22B of the cover body 22. On the other hand, the rear reinforcement member 24 is formed into a hollow columnar shape having a U-shaped section and extending in the up-and-down direction and includes a joint surface area 24A, a vertical surface area 24B, and an inclined surface area 24C similarly to the front reinforcement member 23.

The front reinforcement member 23 and the rear reinforcement member 24 are arranged on the front end side and the rear end side of the cover body 22 sandwiching the openings 22C, 22D and the like. The joint surface area 23A of the front reinforcement member 23 and the joint surface area 24A of the rear reinforcement member 24 are welded to the inner surface 22F of the cover body 22 from the side plate section 22A to the curved plate section 22B of the cover body 22. On the vertical surface area 24B of the rear reinforcement member 24, two hinge members 25 are mounted apart from each other vertically. The cover body 22 is configured to be supported by the flange portion 12A of the rear support member 12 through each of these hinge members 25.

A flange plate 26 is provided on the front end side of the cover body 22 so as to cover the front reinforcement member 23, the flange plate 26 is made of a plate body extending in the up-and-down direction and is fixed to the inner surface 22F of the cover body 22 by using means such as welding. The front end side of the flange plate 26 protrudes forward from the cover body 22, and it is configured such that, if the left front door cover 17 and the left rear door cover 21 are closed, the front end side of the flange plate 26 is overlapped with the left front door cover 17. On the front end side of the flange plate 26, a lock mechanism (not shown) for holding the left rear door cover 21 at a closed position is provided.

Subsequently, indicated at 27 is the plate mounting front bracket provided on the front end side of the cover body 22, and indicated at 28 is the plate mounting rear bracket provided on the rear end side of the cover body 22. The plate mounting front bracket 27 is arranged between the front reinforcement member 23 and the front ends of the openings 22C and 22D and the grill 22E of the cover body 22, while the plate mounting rear bracket 28 is arranged between the rear reinforcement member 24 and the rear ends of the openings 22C and 22D and the grill 22E of the cover body 22. That is, these brackets 27 and 28 are arranged by being juxtaposed on the both sides in the front-and-rear direction sandwiching the openings 22C and 22D and the grill 22E of cover body 22 between them.

Specifically, these brackets 27 and 28 are welded to the inner surface 22F of the cover body 22 in a state extending in the up-and-down direction over the side plate section 22A and the curved plate section 22B of the cover body 22. Therefore, the brackets 27 and 28 form a seat for mounting the air flow plate 29 which will be described later on the inner surface 22F of the cover body 22 and also reinforce the cover body 22 in which the openings 22C and 22D and the grill 22E are formed.

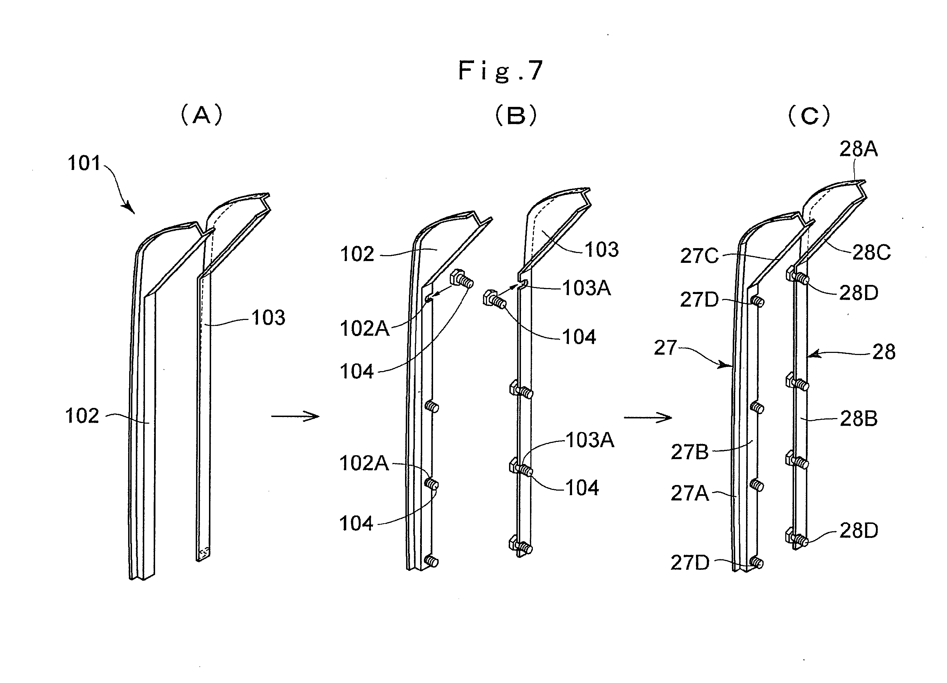

Here, the plate mounting front bracket 27 and the plate mounting rear bracket 28 are formed by using the front reinforcement member 23, for example. A manufacturing process of these brackets 27 and 28 will be described by referring to Fig. 7.

That is, as illustrated in Fig. 7(A), by cutting the lower end side of the front reinforcement member 23 illustrated in Fig. 6, a material 101 whose length dimension in the up-and-down direction (length direction) is reduced from the front reinforcement member 23 is formed. By cutting this material 101 in the up-and-down direction in the intermediate portion in the width direction, two bracket materials 102 and 103 are formed. Subsequently, as illustrated in Fig. 7(B), a plurality of (four, for example) notched grooves 102A and 103A spaced apart in the up-and-down direction are formed in each of the bracket materials 102 and 103. In a state where a bolt 104 is engaged with each of these notched grooves 102A and 103A, the bolt 104 is fixed to each of the bracket materials 102 and 103 by welding.

As described above, as illustrated in Fig. 7(C), the plate mounting front bracket 27 can be formed from the bracket material 102. This plate mounting front bracket 27 includes a joint surface area 27A in contact with the inner surface 22F of the cover body 22, a vertical surface area 27B opposed to the side plate section 22A of the cover body 22 and extending in the vertical direction, and an inclined surface area 27C extending diagonally upward from the upper end side of the vertical surface area 27B while being opposed to the curved plate section 22B of the cover body 22. On the vertical surface area 27B, a plurality of (four, for example) bolts 27D as mounting tools are projected horizontally toward the inside of the cover body 22. As described above, the joint surface area 27A of the plate mounting front bracket 27 has substantially the same shape as that of the joint surface area 23A of the front reinforcement member 23. By welding this joint surface area 27A to the inner surface 22F of the cover body 22, the plate mounting front bracket 27 is joined to the inner surface 22F of the cover body 22 without a gap.

On the other hand as illustrated in Fig. 7(C), the plate mounting rear bracket 28 can be formed from the bracket material 103. The plate mounting rear bracket 28 also includes a joint surface area 28A, a vertical surface area 28B, and an inclined surface area 28C similarly to the plate mounting front bracket 27. On the vertical surface area 28B, a plurality of (four, for example) bolts 28D as mounting tools are projected. As described above, the joint surface area 28A of the plate mounting rear bracket 28 has substantially the same shape as that of the joint surface area 23A of the front reinforcement member 23. By welding this joint surface area 28A to the inner surface 22F of the cover body 22, the plate mounting rear bracket 28 is joined to the inner surface 22F of the cover body 22 without a gap.

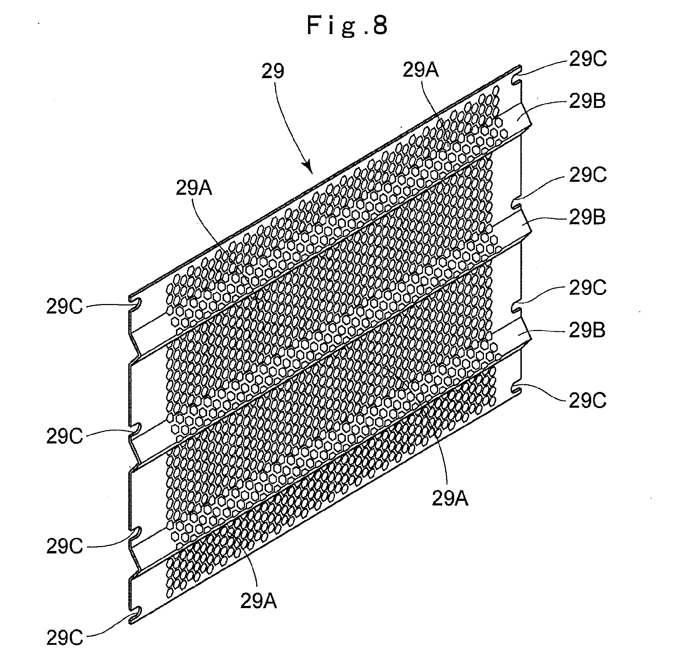

Indicated at 29 is an air flow plate detachably mounted to the plate mounting front bracket 27 and the plate mounting rear bracket 28, respectively. As illustrated in Fig. 8, this air flow plate 29 is made of a plate body forming a rectangular shape as a whole, and a large number of hexagonal air flow holes 29A are bored over substantially the whole surface. As a result, the air flow plate 29 has air flow through each of the air flow holes 29A and shuts off large foreign substances (trash) larger than the air flow hole 29A such as fallen leaves, paper pieces and the like, for example.

Here, on the air flow plate 29, a plurality of bend portions 29B formed by press work is provided. Each of these bend portions 29B has a triangular sectional shape and extends in the longitudinal direction of the air flow plate 29 and is formed in three rows at appropriate intervals in the up-and-down direction. As a result, rigidity of the air flow plate 29 made of a single plate body can be improved by each of the bend portions 29B.

On the other hand, on the both end portions in the longitudinal direction of the air flow plate 29, a plurality of (four, for example) U-shaped notched grooves 29C as engaged portions are provided at intervals in the up-and-down direction. Each of these notched grooves 29C corresponds to each of the bolts 27D of the plate mounting front bracket 27 and each of the bolts 28D of the plate mounting rear bracket 28. Therefore, as illustrated in Fig. 5, the air flow plate 29 engages each of the bolts 27D of the plate mounting front bracket 27 and each of the bolts 28D of the plate mounting rear bracket 28 in each of the notched grooves 29C. By screwing a nut 30 with each of the bolts 27D and 28D in this state, the air flow plate 29 is detachably attached to each of the brackets 27 and 28.

In this state, each of the openings 22C and 22D formed in the cover body 22 is covered by the air flow plate 29 from the inner surface 22F side. Therefore, it is configured such that the outside air having passed through the openings 22C and 22D is supplied to the heat exchanger 9 through each of the air flow holes 29A of the air flow plate 29, and trash such as fallen leaves, paper pieces and the like mixed in the outside air is shut off by the air flow plate 29.

As described above, by mounting the air flow plate 29 on the plate mounting front bracket 27 and the plate mounting rear bracket 28 fixed to the inner surface 22F of the cover body 22, the left rear door cover 21 has a double structure of the cover body 22 and the air flow plate 29. In this case, each of the brackets 27 and 28 is formed by using the front reinforcement member 23, respectively. Therefore, the joint surface area 27A of the plate mounting front bracket 27 and the joint surface area 28A of the plate mounting rear bracket 28 can be joined to the inner surface 22F of the cover body 22 without a gap. As a result, a closed sectional structure is formed by the cover body 22, the front and rear brackets 27 and 28, and the air flow plate 29, and rigidity of the entire left rear door cover 21 can be further improved.

The left rear door cover 21 according to the first embodiment has the above-described configuration, and subsequently, a work of mounting the left rear door cover 21 to the revolving frame 5 will be described.

First, as illustrated in Fig. 5, a body portion of the left rear door cover 21 in which the front and rear reinforcement members 23 and 24, the flange plate 26, and the brackets 27 and 28 are fixed to the inner surface 22F of the cover body 22 is prepared. On the other hand, as illustrated in Fig. 3, the front support member 11 and the rear support member 12 constituting the support frame 10 of the heat exchanger 9 are mounted on each of the extension beams 5D of the revolving frame 5.

Subsequently, the rear reinforcement member 24 fixed to the cover body 22 and the flange portion 12A of the rear support member 12 are connected to each other by using the upper and lower hinge members 25. As a result, the body portion of the left rear door cover 21 can be supported swingably around the hinge member 25 with respect to the rear support member 12.

In this case, since the air flow plate 29 is not mounted on the plate mounting front bracket 27 and the plate mounting rear bracket 28, the weight of the body portion of the left rear door cover 21 not including the air flow plate 29 can be reduced. As a result, workability when the body portion of the left rear door cover 21 is mounted on the rear support member 12 installed upright on the revolving frame 5 through the hinge member 25 can be improved.

After the body portion of the left rear door cover 21 is mounted on the rear support member 12 through the hinge member 25, as illustrated in Fig. 5, each of the bolts 27D and 28D of each of the brackets 27 and 28 is engaged with the notched groove 29C of the air flow plate 29, respectively, and the nut 30 is screwed with each of the bolts 27D and 28B, respectively. As a result, the air flow plate 29 can be mounted on each of the bracket 27 and 28, and each of the openings 22C and 22D of the cover body 22 can be covered by the air flow plate 29.

As described above, the left rear door cover 21 composed of the cover body 22, the front and rear reinforcement members 23 and 24, the brackets 27 and 28, the air flow plate 29 and the like can be mounted on the rear support member 12 through the hinge member 25. As a result, the left rear door cover 21 rotates around the hinge member 25 and can be opened/closed between a door closed position (position in Fig. 3) where the flange plate 26 is overlapped with the flange portion 11A of the front support member 11 and a door open position (position in Fig. 2) where the flange plate 26 is spaced apart from the flange portion 11A of the front support member 11.

Then, the left rear door cover 21 according to the first embodiment includes the cover body 22 in which the upper and lower openings 22C and 22D and the grill 22E are provided, the brackets 27 and 28 fixed to the both front and rear sides sandwiching each of the openings 22C and 22D, and the air flow plate 29 detachably attached to each of the brackets 27 and 28.

As a result, the left rear door cover 21 having a double structure combining the cover body 22 and the air flow plate 29 formed of separate members can be formed. Therefore, even if the two openings 22C and 22D and the grill 22E are formed in the left rear door cover 21, rigidity of this entire left rear door cover 21 can be improved.

Moreover, the plate mounting front bracket 27 and the plate mounting rear bracket 28 are fixed to the both front and rear sides sandwiching each of the openings 22C and 22D of the cover body 22, and the air flow plate 29 is mounted to each of these brackets 27 and 28. As a result, a closed sectional structure can be formed by the cover body 22, each of the brackets 27 and 28, and the air flow plate 29. As a result, the periphery of each of the openings 22C and 22D in the cover body 22 can be reinforced in a concentrated manner, and rigidity of the entire left rear door cover 21 can be further improved.

On the other hand, by forming the cover body 22 and the air flow plate 29 by separate members, the cover body 22 and the air flow plate 29 can be painted separately, for example. Therefore, the painted color of the cover body 22 and the painted color of the air flow plate 29 can be made separate, and design freedom can be improved.

Moreover, if the left rear door cover 21 is to be mounted on the rear support member 12 installed upright on the revolving frame 5, first, only the body portion of the light-weighted left rear door cover 21 to which the air flow plate 29 is not mounted can be mounted on the rear support member 12 through the hinge member 25. After that, the air flow plate 29 can be mounted on the plate mounting front bracket 27 and the plate mounting rear bracket 28. Therefore, as compared with a case in which a heavy-weighted left rear door cover 21 to which the air flow plate 29 is mounted is to be mounted, workability of the mounting work can be improved.

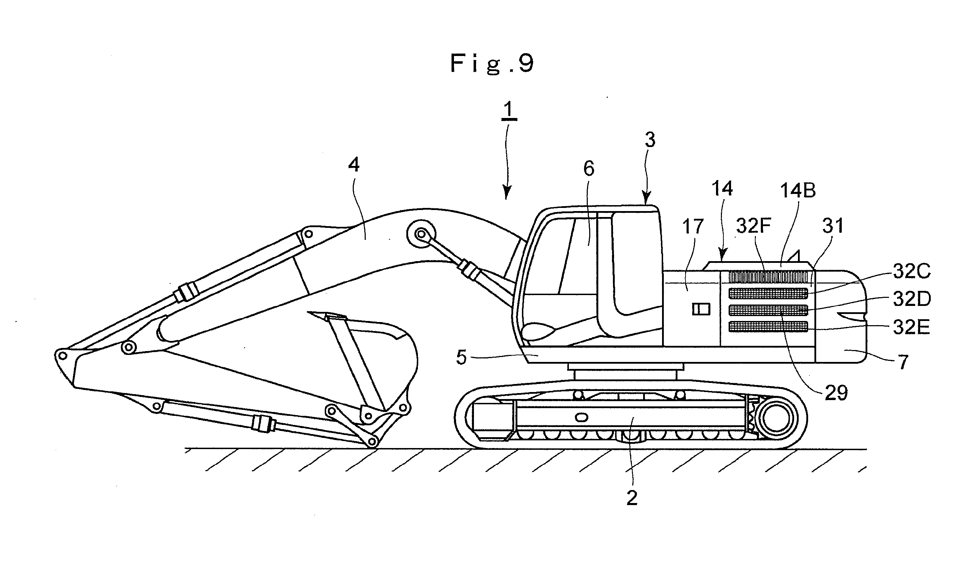

Subsequently, a case in which the first embodiment of the exterior cover according to the present invention is applied to the left rear door cover of the tropical zone specification illustrated in Figs. 9 to 11 will be described.

Designated at 31 is a left rear door cover of the tropical zone specification, and this left rear door cover 31 is mounted on the hydraulic excavator 1 operating in the tropical zone. In this left rear door cover 31, three openings 32C, 32D, and 32E and a grill 32F are formed in a cover body 32 which will be described later in order to suck a large amount of outside air (cooling air) into the exterior cover 14.

Here, the left rear door cover 31 includes, similarly to the left rear door cover 21 of the subtropical zone specification, the cover body 32 which will be described later, the plate mounting front bracket 27, the plate mounting rear bracket 28, and the air flow plate 29.

Indicated at 32 is the cover body of the tropical zone specification. This cover body 32 includes a side plate section 32A having the same shape as that of the cover body 22 of the subtropical zone specification and a curved plate section 32B. In the side plate section 32A of the cover body 32, the three openings 32C, 32D, and 32E are formed by being juxtaposed in the up-and-down direction, and in the curved plate section 32B, a grill 32F in which a large number of small rectangular holes 32F1 are aligned in the matrix state are formed. To an inner surface 32G of the cover body 32, the front and rear reinforcement members 23 and 24, the flange plate 26, the plate mounting front bracket 27, the plate mounting rear bracket 28 are fixed and provided.

That is, the cover body 32 of the tropical zone specification has the number of the openings 32C, 32D, and 32E formed in the side plate section 32A larger only by one than that of the cover body 22 of the subtropical zone specification, and the cover body 32 and the cover body 22 have substantially the same shape.

Each of the bolts 27D of the plate mounting front bracket 27 and each of the bolts 28D of the plate mounting rear bracket 28 are engaged with each of the notched grooves 29C of the air flow plate 29, and the nut 30 is screwed with each of the bolts 27D and 28D. As a result, the air flow plate 29 is detachably mounted to each of the brackets 27 and 28.

As described above, the left rear door cover 21 of the subtropical zone specification includes the cover body 22 and the air flow plate 29, while the left rear door cover 31 of the tropical zone specification includes the cover body 32 and the air flow plate 29. Therefore, the air flow plate 29 can be made common between the two types of the left rear door covers 21 and 31 having the different numbers of the openings. Therefore, when the plurality of types of the left rear door covers 21 and 31 and the like are to be manufactured, there is no need to prepare the plurality of types of cover bodies and the plurality of types of air flow plates. As a result, the number of components can be decreased by the portion that the air flow plate 29 can be made common, which also contributes to reduction of the manufacturing cost.

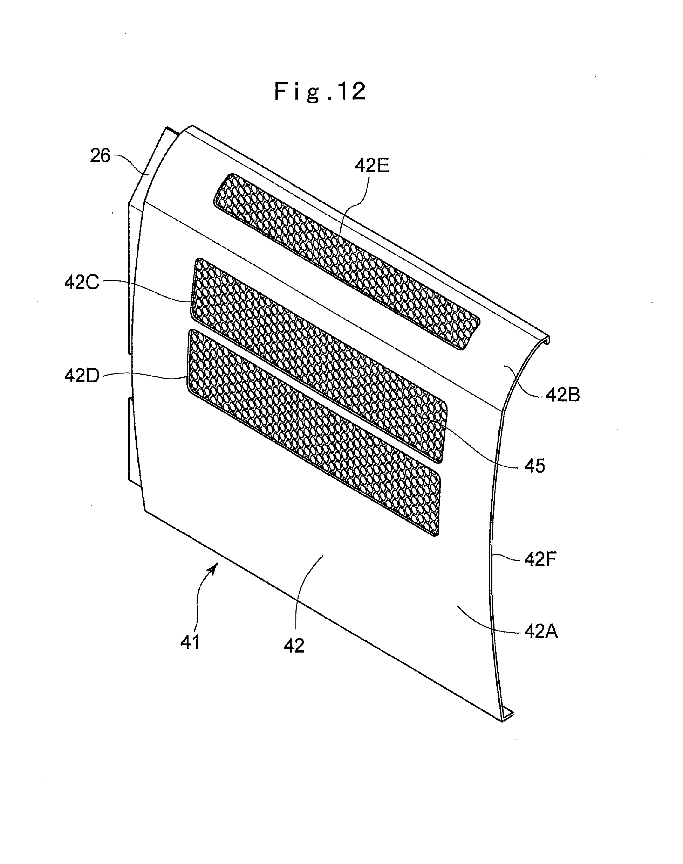

Next, Figs. 12 to 16 illustrate a second embodiment of the present invention. A characteristic of the second embodiment is that an opening is provided in the side plate section and the curved plate section of the cover body, and it is configured that each of these openings is covered by a single air flow plate. In the second embodiment, the component elements that are identical to those of the foregoing first embodiment will be simply denoted by the same reference numerals to avoid repetitions of similar explanations.

First, a case in which the second embodiment of the exterior cover according to the present invention is applied to the left rear door cover of the subtropical zone specification will be described.

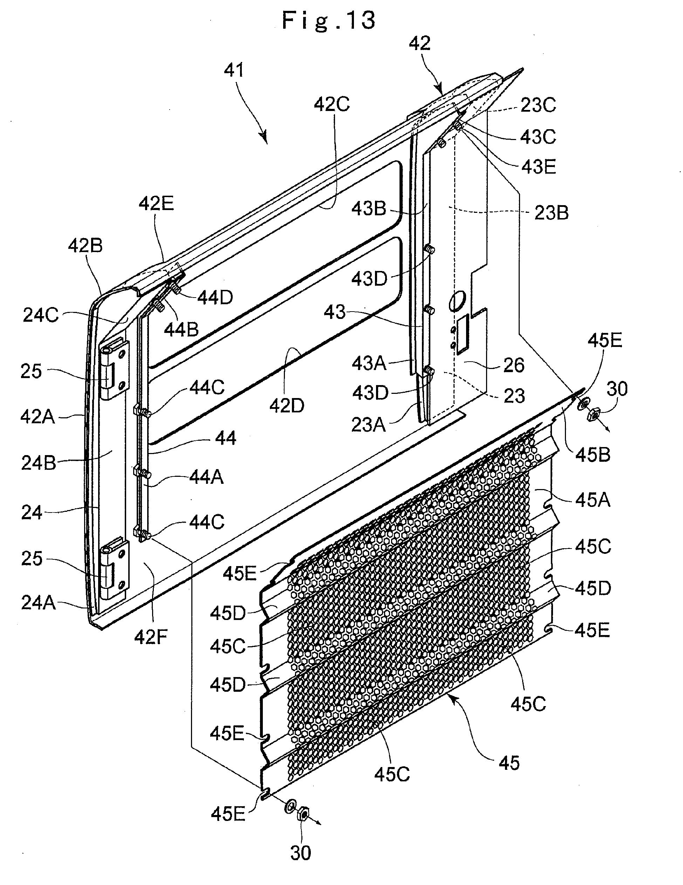

Designated at 41 is a left rear door cover according to the second embodiment, and the left rear door cover 41 is mounted on the hydraulic excavator operating in the subtropical zone, for example. As illustrated in Figs. 12 and 13, the left rear door cover 41 includes a cover body 42 which will be described later, a plate mounting front bracket 43, a plate mounting rear bracket 44, and an air flow plate 45.

Indicated at 42 is a cover body which becomes a base of the left rear door cover 41. The cover body 42 includes a side plate section 42A extending in the front-and-rear direction and a curved plate section 42B having an arc shape extending diagonally upward from the upper end side of the side plate section 42A. In the side plate section 42A of the cover body 42, two openings 42C and 42D are formed by being juxtaposed in the up-and-down direction, and one opening 42E which is narrower than the opening 42C is formed in the curved plate section 42B. To an inner surface 42F of the cover body 42, the front and rear reinforcement members 23 and 24, the flange plate 26, and front and rear brackets 43 and 44 which will be described later are fixed and provided.

Indicated at 43 is the plate mounting front bracket provided on the inner surface 42F of the cover body 42, and indicated at 44 is the plate mounting rear bracket located on the rear side of the plate mounting front bracket 43 and provided on the inner surface 42F of the cover body 42. These brackets 43 and 44 are arranged by being juxtaposed on the both sides sandwiching each of the openings 42C, 42D, and 42E of the cover body 42 and are welded to the inner surface 42F of the cover body 42.

Here, the plate mounting front bracket 43 is formed by using the front reinforcement member 23 similarly to that according to the first embodiment. That is, the plate mounting front bracket 43 includes a joint surface area 43A joined to the inner surface 42F of the cover body 42, a vertical surface area 43B opposed to the side plate section 42A of the cover body 42 and extending in the vertical direction, and an inclined surface area 43C extending diagonally upward from the upper end side of the vertical surface area 43B. On the vertical surface area 43B, a plurality of (three, for example) horizontal bolts 43D as mounting tools protruding horizontally toward the inside of the cover body 42 are projected, and on the inclined surface area 43C, a plurality of (two, for example) downward bolts 43E as mounting tools protruding diagonally downward toward the inside of the cover body 42 are projected. On the other hand, the plate mounting rear bracket 44 is also formed by using the front reinforcement member 23 similarly to the plate mounting front bracket 43 and includes a joint surface area (not shown), a vertical surface area 44A, and an inclined surface area 44B. On the vertical surface area 44A, a plurality of (three, for example) horizontal bolts 44C are projected, and on the inclined surface area 44B, a plurality of (two, for example) downward bolts 44D are projected.

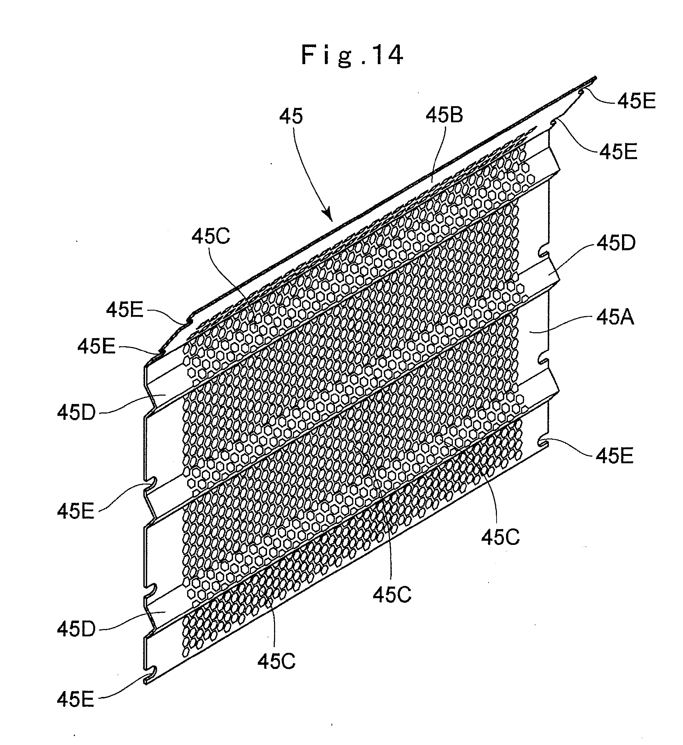

Indicated at 45 is the air flow plate detachably mounted on the plate mounting front bracket 43 and the plate mounting rear bracket 44. As illustrated in Fig. 14, this air flow plate 45 has a vertical plate area 45A opposed to the vertical surface areas 43A and 44A of each of the brackets 43 and 44, and an inclined plate area 45B opposed to the inclined surface areas 43C and 44B. Moreover, a large number of air flow holes 45C are bored over substantially the whole area of the air flow plate 45.

On the vertical plate area 45A of the air flow plate 45, a plurality of bend portions 45D are formed in the up-and-down direction at appropriate intervals. On the other hand, on the both end portions in the longitudinal direction of the air flow plate 45, a plurality of (five, for example) U-shaped notched grooves 45E as engaged portions are provided.

As illustrated in Fig. 13, the horizontal bolts 43D and 44C and the downward bolts 43E and 44D in each of the brackets 43 and 44 are engaged with each of the notched grooves 45E of the air flow plate 45, and the nut 30 is screwed with each of the horizontal bolts 43D and 44C and the downward bolts 43E and 44D. As a result, the air flow plate 45 is detachably mounted on the front and rear brackets 43 and 44, and each of the openings 42C, 42D, and 42E is covered by the single air flow plate 45.

The left rear door cover 41 according to the second embodiment has the above-described configuration, and its basic action has no particular difference from the left rear door cover 21 according to the above-described first embodiment.

Then, the left rear door cover 41 according to the second embodiment can cover the two openings 42C and 42D provided in the side plate section 42A of the cover body 42 and the one opening 42E provided in the curved plate section 42B by the single air flow plate 45. Therefore, the number of components of the left rear door cover 41 can be reduced.

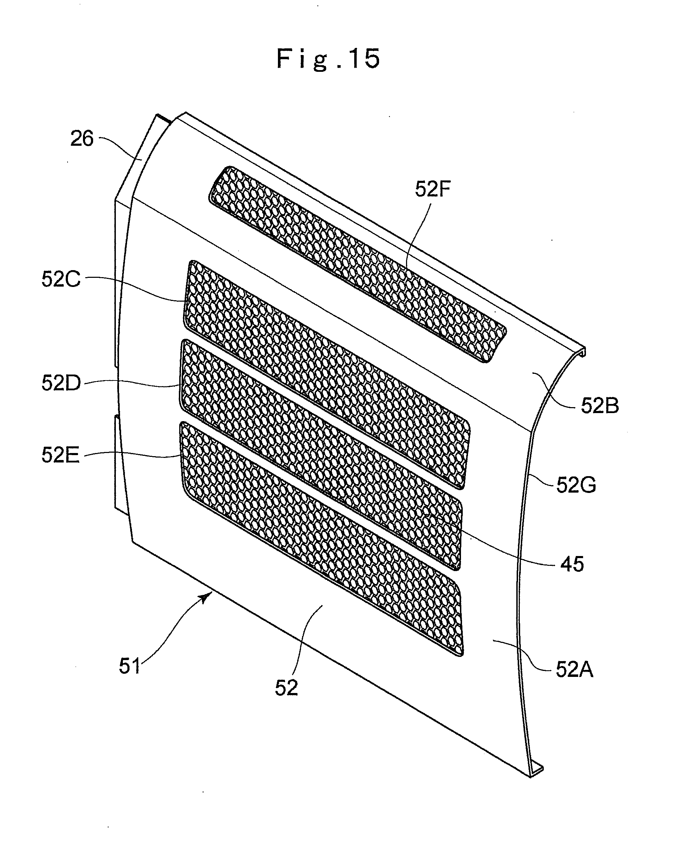

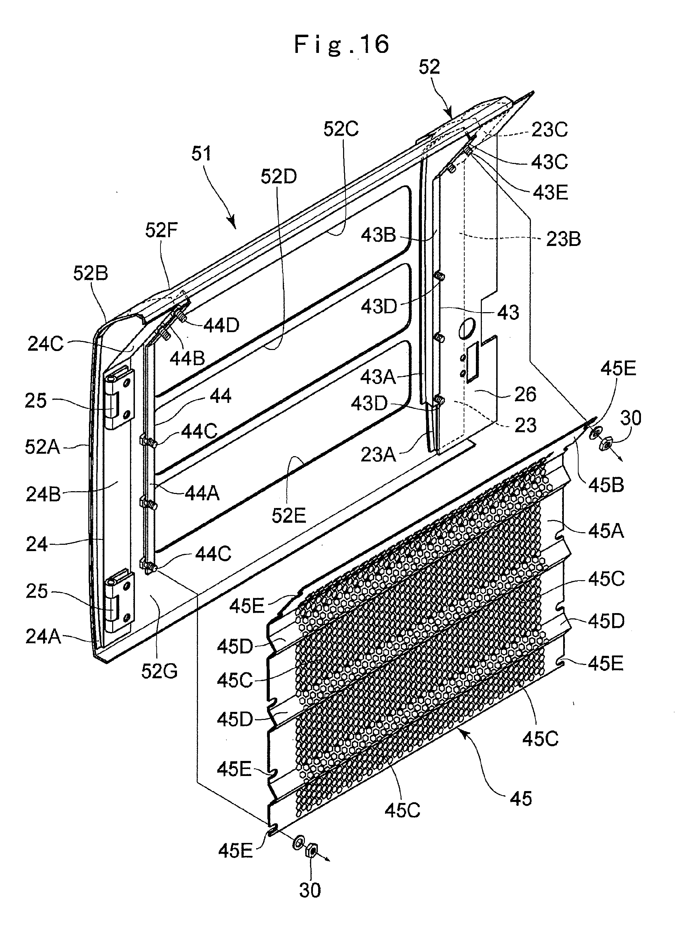

Subsequently, a case in which the second embodiment of the exterior cover according to the present invention is applied to the left rear door cover of the tropical zone specification illustrated in Figs. 15 and 16 will be described.

Designated at 51 is the left rear door cover of the tropical zone specification, and the left rear door cover 51 is mounted on a hydraulic excavator operating in the tropical zone. Here, the left rear door cover 51 is composed of, similarly to the left rear door cover 41 of the above-described subtropical zone specification, a cover body 52 which will be described later, the plate mounting front bracket 43, the plate mounting rear bracket 44, and the air flow plate 45.

Indicated at 52 is the cover body of the tropical zone specification. The cover body 52 is composed of a side plate section 52A and a curved plate section 52B having the same shape as that of the cover body 42 of the subtropical zone specification. Here, in the side plate section 52A of the cover body 52, three openings 52C, 52D, and 52E are formed by being juxtaposed in the up-and-down direction, and in the curved plate section 52B, an opening 52F narrower in width than the opening 52C is formed. On the inner surface 52G of the cover body 52, the front and rear reinforcement members 23 and 24, the flange plate 26, and the front and rear brackets 43 and 44 are fixed and provided.

That is, the cover body 52 of the tropical zone specification has the number of the openings 52C, 52D, and 52E formed in the side plate section 52A larger only by one than that of the cover body 42 of the subtropical zone specification, and the cover body 52 and the cover body 42 have substantially the same shape.

The horizontal bolts 43D and 44C and the downward bolts 43E and 44D in each of the brackets 43 and 44 are engaged with each of the notched grooves 45E of the air flow plate 45, and the nut 30 is screwed with each of the horizontal bolts 43D and 44C and the downward bolts 43E and 44D. As a result, the air flow plate 45 is detachably mounted on each of the brackets 43 and 44.

Thus, in the second embodiment, too, the left rear door cover 41 of the subtropical zone specification and the left rear door cover 51 of the tropical zone specification can communalize the air flow plate 45. Therefore, in manufacturing the plurality of types of the left rear door covers 41, 51 and the like, the air flow plate 45 can be made common and the number of components can be reduced, which can contribute to reduction of a manufacturing cost.

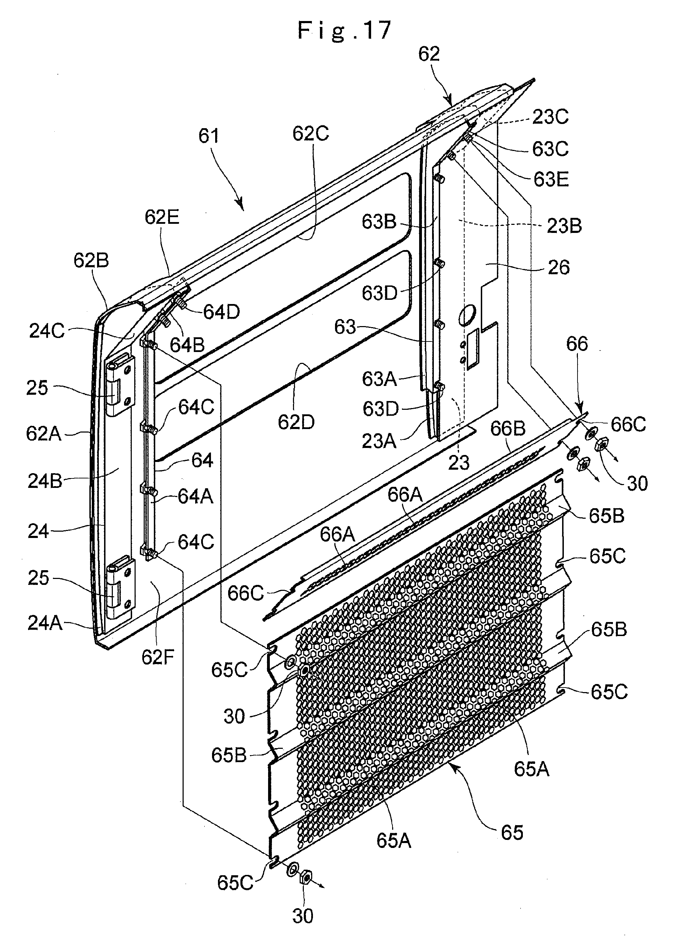

Next, Figs. 17 to 19 illustrate a third embodiment of the present invention. A characteristic of the third embodiment is that the plurality of the openings provided in the cover body are configured to be covered by a lower air flow plate and an upper air flow plate. In the third embodiment, the component elements that are identical to those of the foregoing first embodiment will be simply denoted by the same reference numerals to avoid repetitions of similar explanations.

First, a case in which the third embodiment of the exterior cover according to the present invention is applied to the left rear door cover of the subtropical zone specification will be described.

Designated at 61 is the left rear door cover according to the third embodiment, and the left rear door cover 61 is mounted on a hydraulic excavator operating in the subtropical zone, for example. As illustrated in Fig. 17, the left rear door cover 61 is composed of a cover body 62 which will be described later, front and rear brackets 63 and 64, a lower air flow plate 65, and an upper air flow plate 66.

Indicated at 62 is a cover body which becomes a base of the left rear door cover 61. The cover body 62 includes a side plate section 62A extending in the front-and-rear direction and a curved plate section 62B having an arc shape extending diagonally upward from the upper end side of the side plate section 62A. In the side plate section 62A of the cover body 62, two openings 62C and 62D are formed by being juxtaposed in the up-and-down direction, and one opening 62E is formed in the curved plate section 62B. To an inner surface 62F of the cover body 62, the front and rear reinforcement members 23 and 24, the flange plate 26, and front and rear brackets 63 and 64 which will be described later are fixed and provided.

Indicted at 63 is the plate mounting front bracket provided on the inner surface 62F of the cover body 62, and indicated at 64 is the plate mounting rear bracket located on the rear side of the plate mounting front bracket 63 and provided on the inner surface 62F of the cover body 62. These brackets 63 and 64 are arranged by being juxtaposed on the both sides sandwiching each of the openings 62C, 62D, and 62E of the cover body 62 and are welded to the inner surface 62F of the cover body 62.

The plate mounting front bracket 63 is composed of a joint surface area 63A joined to the inner surface 62F of the cover body 62, a vertical surface area 63B opposed to the side plate section 62A of the cover body 62, and an inclined surface area 63C extending diagonally upward from the upper end side of the vertical surface area 63B. On the vertical surface area 63B, a plurality of (four, for example) horizontal bolts 63D as mounting tools are projected, and on the inclined surface area 63C, a plurality of (two, for example) downward bolts 63E as mounting tools are projected. On the other hand, the plate mounting rear bracket 64 includes, similarly to the plate mounting front bracket 63, a joint surface area (not shown), a vertical surface area 64A, and an inclined surface area 64B. On the vertical surface area 64A, a plurality of horizontal bolts 64C as mounting tools are projected, and on the inclined surface area 64B, a plurality of downward bolts 64D as mounting tools are projected.

Indicated at 65 is the lower air flow plate detachably mounted to the vertical surface areas 63B and 64A of the front and rear brackets 63 and 64, respectively. The lower air flow plate 65 constitutes an air flow plate according to the third embodiment together with an upper air flow plate 66 which will be described later. This lower air flow plate 65 is formed of a plate body in which a large number of air flow holes 65A are bored, and three rows of bend portions 65B and a plurality of (four, for example) notched grooves 65C as engaged portions are provided.

As illustrated in Fig. 17, each of the horizontal bolts 63D and 64C of each of the brackets 63 and 64 is engaged with each of the notched grooves 65C of the lower air flow plate 65, and the nut 30 is screwed with each of the horizontal bolts 63D and 64C. As a result, the lower air flowplate 65 can be detachably mounted on each of the vertical surface areas 63B and 64A of each of the brackets 63 and 64.

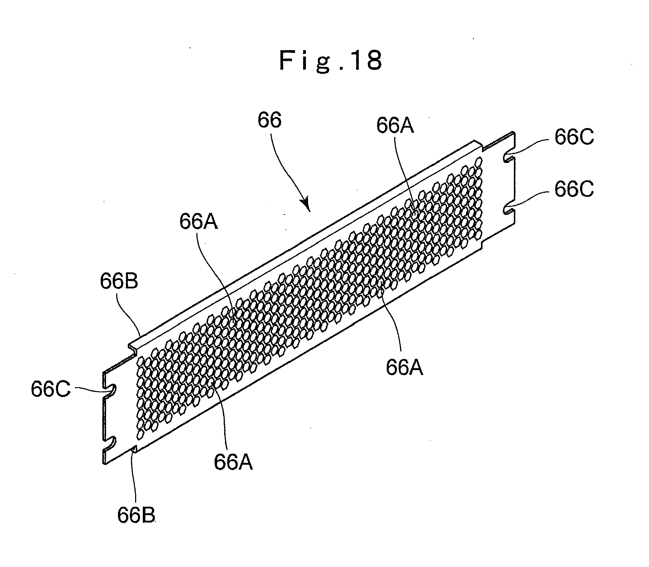

Indicated at 66 is the upper air flow plate made of a member different from the lower air flow plate 65. This upper air flow plate 66 is detachably mounted on each of the inclined surface areas 63C and 64B of each of the brackets 63 and 64. As illustrated in Fig. 18, the upper air flow plate 66 is formed as a narrow rectangular plate body, and a large number of air flow holes 66A are bored over substantially the whole surface.

On the both end sides in the width direction of the upper air flow plate 66, a bend portion 66B bent at a right angle is formed, and rigidity of the upper air flow plate 66 is improved by the bend portion 66B. On the other hand, on the both end portions in the longitudinal direction of the upper air flow plate 66, a plurality of (two, for example) notched grooves 66C as engaged portions are provided. Each of the downward bolts 63E and 64D of each of the brackets 63 and 64 is engaged with each of the notched grooves 66C of the upper air flow plate 66, and the nut 30 is screwed with each of the downward bolts 63E and 64D. As a result, the upper air flow plate 66 is detachably mounted on the inclined surface areas 63C and 64B of each of the brackets 63 and 64.

The left rear door cover 61 according to the third embodiment has the above-described configuration, and its basic action has no particular difference from the left rear door cover 21 according to the above-described first embodiment.

Then, the left rear door cover 61 according to the third embodiment is configured such that the lower air flow plate 65 is mounted on the vertical surface areas 63B and 64A of the front and rear brackets 63 and 64, and the upper air flow plate 66 is mounted on the inclined surface areas 63C and 64B.

As a result, the openings 62C and 62D on the lower side of the cover body 62 can be covered by the lower air flow plate 65, and the opening 62E on the upper side can be covered by the upper air flow plate 66 made of a member different from the lower air flow plate 65.

As described above, the lower air flow plate 65 having a shape suitable for covering the openings 62C and 62D of the side plate section 62A and the upper air flow plate 66 having a shape suitable for covering the opening 62E of the curved plate section 62B are both used. Therefore, a portion where an opening is not formed in the cover body 62 is not covered by an air flow plate uselessly. As a result, an area of the entire air flow plate combining the lower air flow plate 65 and the upper air flow plate 66 can be kept to required minimum, and the weight of the left rear door cover 61 can be reduced.

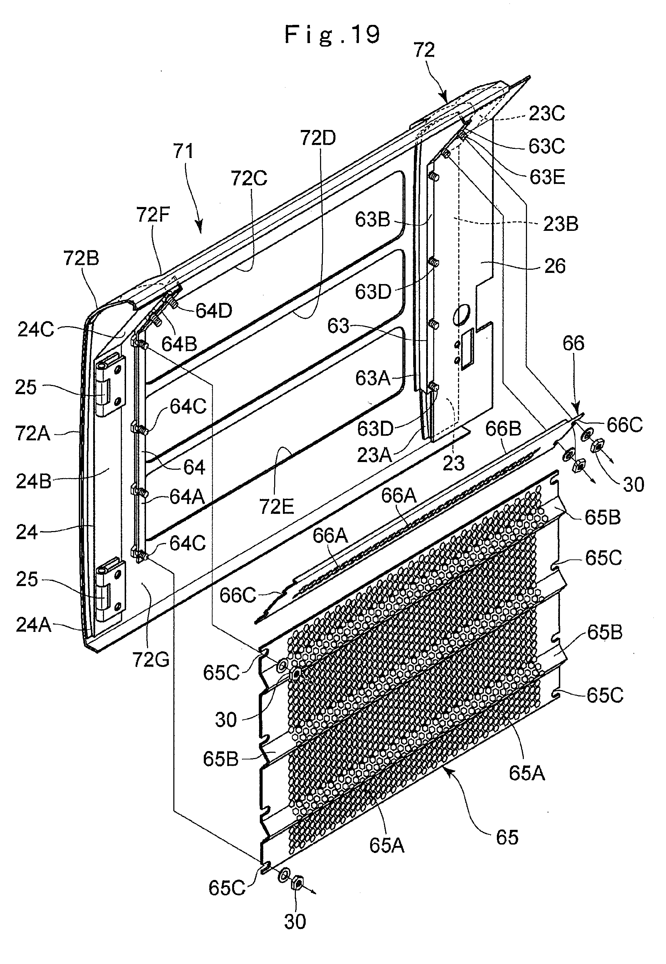

Subsequently, a case in which the third embodiment of the exterior cover according to the present invention is applied to the left rear door cover of the tropical zone specification illustrated in Fig. 19 will be described.

Designated at 71 is the left rear door cover of the tropical zone specification, and the left rear door cover 71 is mounted on a hydraulic excavator operating in the tropical zone. Here, the left rear door cover 71 is composed of, similarly to the left rear door cover 61 of the subtropical zone specification, a cover body 72 which will be described later, the brackets 63 and 64, the lower air flow plate 65, and the upper air flow plate 66.

Indicated at 72 is the cover body of the tropical zone specification. The cover body 72 is composed of a side plate section 72A and a curved plate section 72B having the same shape as that of the cover body 62 of the subtropical zone specification. In the side plate section 72A of the cover body 72, three openings 72C, 72D, and 72E are formed by being juxtaposed in the up-and-down direction, and in the curved plate section 72B, one opening 72F is formed. On an inner surface 72G of the cover body 72, the front and rear reinforcement members 23 and 24, the flange plate 26, the plate mounting front bracket 63, and the plate mounting rear bracket 64 are fixed and provided.

That is, the cover body 72 of the tropical zone specification has the number of the openings 72C, 72D, and 72E formed in the side plate section 72A larger only by one than that of the cover body 62 of the subtropical zone specification, and the cover body 72 and the cover body 62 have substantially the same shape.

The horizontal bolts 63D and 64C in each of the brackets 63 and 64 are engaged with each of the notched grooves 65C of the lower air flow plate 65, and the nut 30 is screwed with each of the horizontal bolts 63D and 64C. As a result, the lower air flow plate 65 is mounted on each of vertical surface areas 63B and 64A of each of the brackets 63 and 64. On the other hand, each of the downward bolts 63E and 64D of each of the brackets 63 and 64 is engaged with each of the notched grooves 66C of the upper air flow plate 66, and the nut 30 is screwed with each of the horizontal bolts 63D and 64C. As a result, the upper air flow plate 66 is mounted on the inclined surface areas 63C and 64B of each of the brackets 63 and 64, respectively.

Thus, in the third embodiment, too, the left rear door cover 61 of the subtropical zone specification and the left rear door cover 71 of the tropical zone specification can communalize the lower air flow plate 65 and the upper air flow plate 66. Therefore, in manufacturing the plurality of types of the left rear door covers 61, 71 and the like, the lower air flow plate 65 and the upper air flow plate 66 can be made common and the number of components can be reduced, which can contribute to reduction of a manufacturing cost.

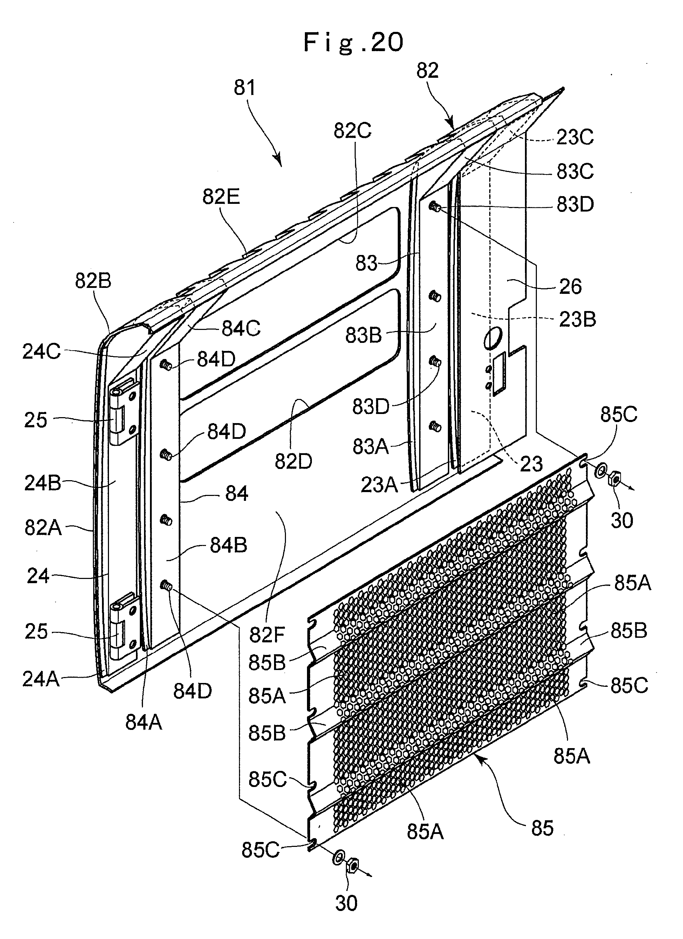

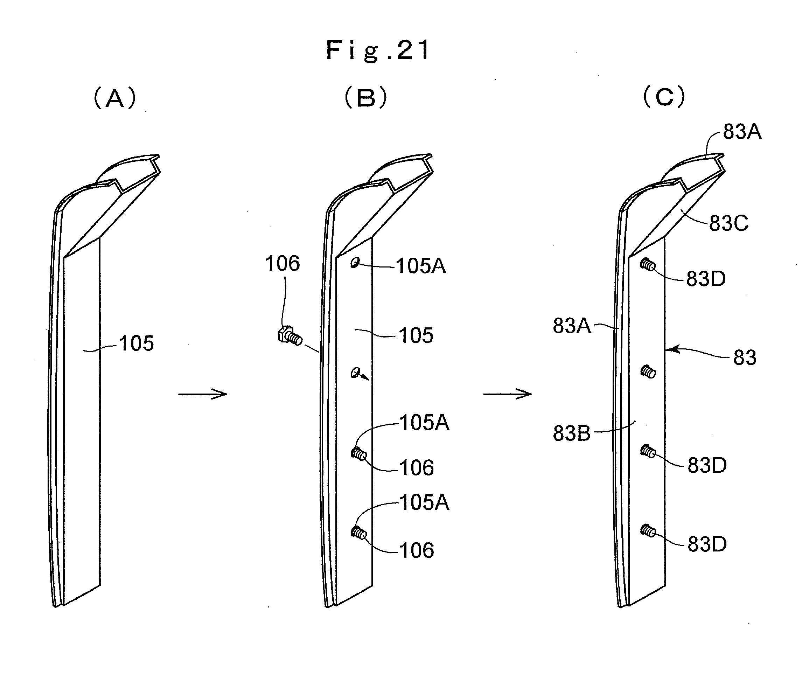

Next, Figs. 20 and 21 illustrate a fourth embodiment of the present invention. A characteristic of the fourth embodiment is that the plate mounting front bracket and the plate mounting rear bracket are formed by reinforcement members. In the fourth embodiment, the component elements that are identical to those of the foregoing first embodiment will be simply denoted by the same reference numerals to avoid repetitions of similar explanations. Moreover, in the fourth embodiment, only a case in which the present invention is applied to the left rear door cover of the subtropical zone specification is exemplified.

Designated at 81 is the left rear door cover according to the fourth embodiment, and the left rear door cover 81 includes a cover body 82, front and rear brackets 83 and 84, and an air flow plate 85 all of which will be described later.

Indicated 82 is the cover body of the left rear door cover 81, and the cover body 82 includes a side plate section 82A and a curved plate section 82B. In the side plate section 82A of the cover body 82, two openings 82C and 82D are formed by being juxtaposed in the up-and-down direction, and in the curved plate section 82B, a grill 82E is formed. To an inner surface 82F of the cover body 82, the front and rear reinforcement members 23 and 24 and each of the brackets 83 and 84 are fixed.

Indicated at 83 is a plate mounting front bracket provided on the inner surface 82F of the cover body 82, and indicated at 84 is a plate mounting rear bracket located on the rear side of the plate mounting front bracket 83 and provided on the inner surface 82F of the cover body 82. These brackets 83 and 84 are arranged on the both sides sandwiching each of the openings 82C and 82D and the grill 82E of the cover body 82 and welded to the inner surface 82F of the cover body 82.

Here, the plate mounting front bracket 83 and the plate mounting rear bracket 84 are formed by using the front reinforcement member 23 as it is. A manufacturing process of each of the brackets 83 and 84 will be described by referring to Fig. 21.

That is, as illustrated in Fig. 21(A), a material for forming the front reinforcement member 23 is prepared as a bracket material 105 as it is. Subsequently, as illustrated in Fig. 21(B), a plurality of (four, for example) bolt insertion holes 105A are formed away from each other in the up-and-down direction in the bracket material 105, and while a bolt 106 is inserted in each of the bolt insertion holes 105A, the bolt 106 is fixed to the bracket material 105 by welding.

As described above, as illustrated in Figs. 21(C), the plate mounting front bracket 83 can be formed from the bracket material 105. The plate mounting front bracket 83 is composed of a joint surface area 83A jointed to the inner surface 82F of the cover body 82, a vertical surface area 83B opposed to the side plate section 82A of the cover body 82, and an inclined surface area 83C extending diagonally upward from the upper end side of the vertical surface area 83B. On the vertical surface area 83B, a plurality of (four, for example) bolts 83D as mounting tools are projected. On the other hand, the plate mounting rear bracket 84 includes a joint surface area 84A, a vertical surface area 84B, an inclined surface area 84C, and a plurality of (four, for example) bolts 84D as mounting tools.

Indicated at 85 is an air flow plate, and the air flow plate 85 is formed of a rectangular plate body in which a large number of air flow holes 85A are bored over substantially the whole surface. On the air flow plate 85, a plurality of bend portions 85B are provided, and on the both end portions in the longitudinal direction of the air flow plate 85, a plurality of (four, for example) U-shaped notched grooves 85C as engaged portions are provided.

Each of the bolts 83D and 84D of each of the brackets 83 and 84 is engaged with each of the notched grooves 85C of the air flow plate 85, and the nut 30 is screwed with each of the bolts 83D and 84D. As a result, the air flow plate 85 is detachably mounted on each of the brackets 83 and 84.

The left rear door cover 81 according to the fourth embodiment has the above-described configuration, and each of the brackets 83 and 84 is formed by using the front reinforcement member 23 as it is. As a result, each of the brackets 83 and 84 can be easily manufactured, and contribution can be made to reduction of a manufacturing cost.

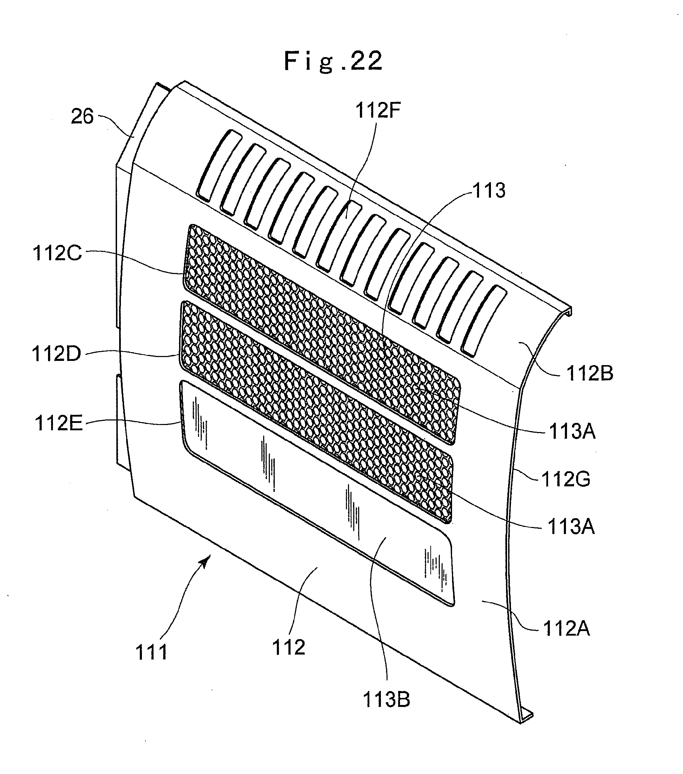

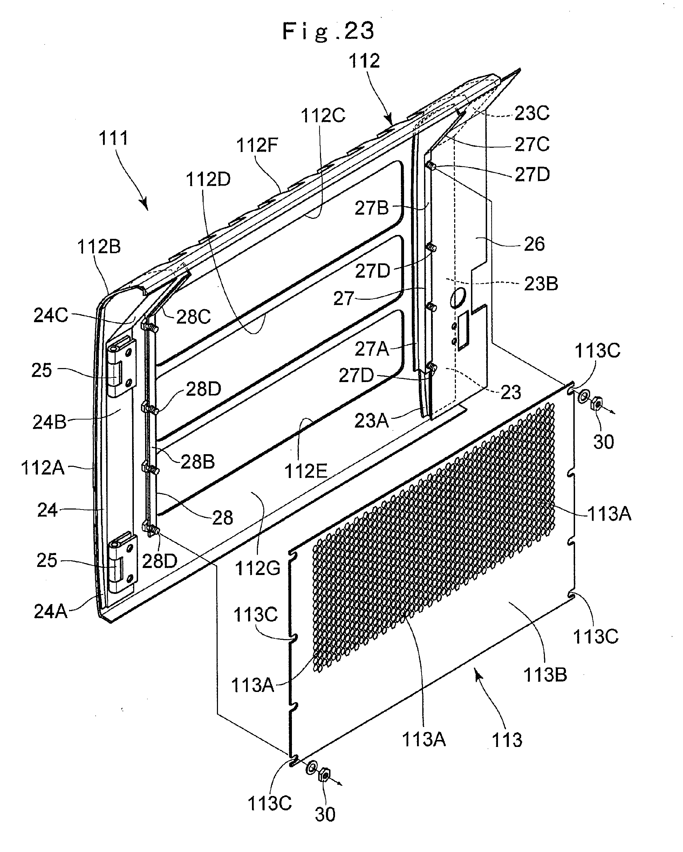

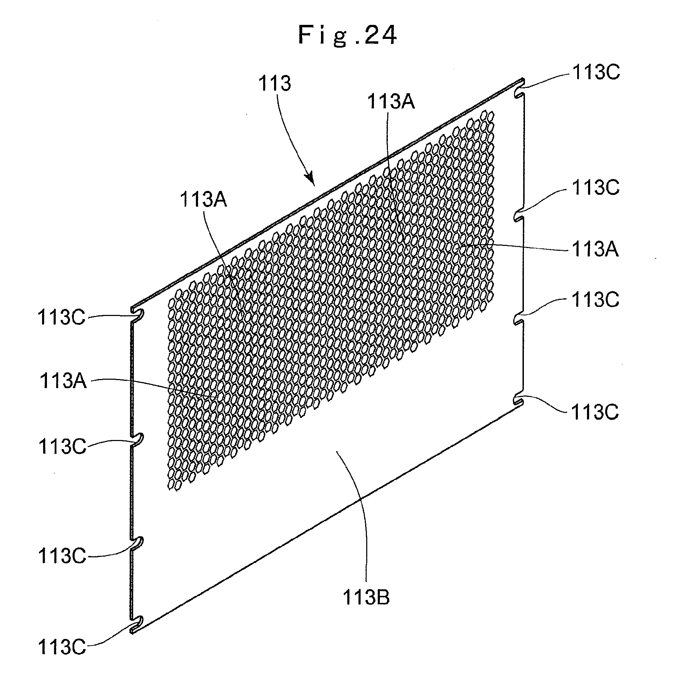

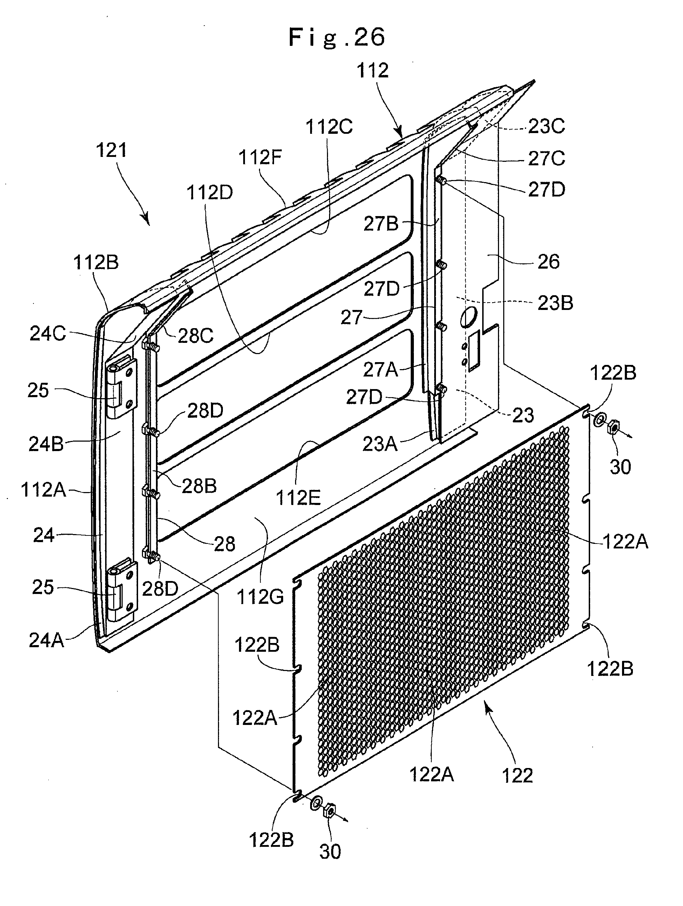

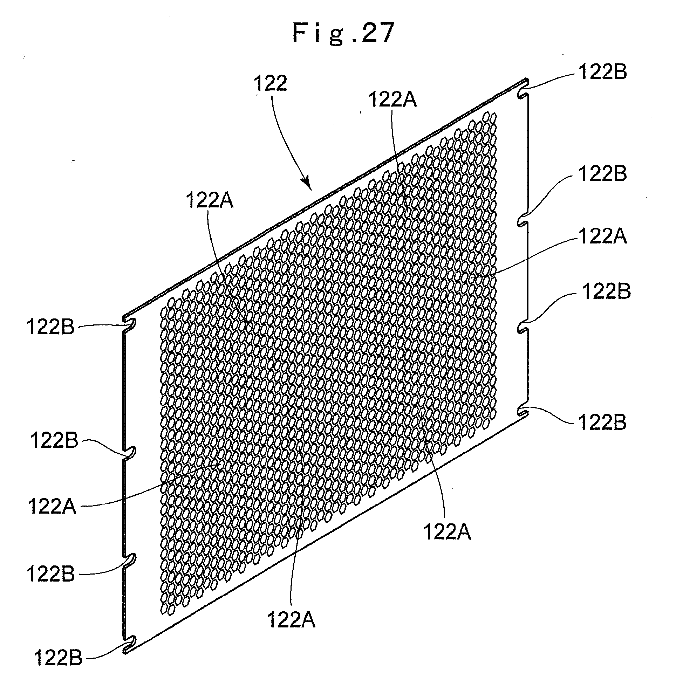

Next, Figs. 22 to 27 illustrate a fifth embodiment of the present invention. A characteristic of the fifth embodiment is that a plurality of types of air flow plates with different ranges in which the air flow holes are formed are mounted on one type of cover body for which the number of openings is set to a certain number. In the fifth embodiment, the component elements that are identical to those of the foregoing first embodiment will be simply denoted by the same reference numerals to avoid repetitions of similar explanations.

First, a case in which the exterior cover according to the fifth embodiment is applied to the left rear door cover of the subtropical zone specification will be described by referring to Figs. 22 to 24.

Designated at 111 is a left rear door cover of the subtropical zone specification according to the fifth embodiment, and the left rear door cover 111 is mounted on the hydraulic excavator operating in the subtropical zone, for example. This left rear door cover 111 of the subtropical zone specification is composed of a cover body 112 which will be described later, front and rear brackets 27 and 28, and an air flow plate 113 which will be described later.

Indicated at 112 is a cover body which becomes a base of the left rear door cover 111. This cover body 112 includes a side plate section 112A extending in the front-and-rear direction and a curved plate section 112B having an arc shape extending diagonally upward from the upper end side of the side plate section 112A. In the side plate section 112A of the cover body 112, three openings 112C, 112D, and 112E are formed by being juxtaposed in the up-and-down direction, and a grill 112F is formed in the curved plate section 112B. To an inner surface 112G of the cover body 112, the front and rear reinforcement members 23 and 24, the flange plate 26, and brackets 27 and 28 are fixed and provided.

Indicated at 113 is the air flow plate of the subtropical zone specification as an air flow plate to be detachably mounted on the cover body 112. This air flow plate 113 is made of a rectangular flat plate body as a whole and has an area which can cover the three openings 112C, 112D, and 112E formed in the cover body 112.

In the air flow plate 113, a large number of air flow holes 113A are bored only within a range (region) corresponding to the two openings 112C and 112D formed in the cover body 112. The range corresponding to the opening 112E formed in the cover body 112 in the air flow plate 113 is a closing surface 113B where there is no air flow hole 113A.

On the both end portions in the longitudinal direction of the air flow plate 113, a plurality of (four, for example) U-shaped notched grooves 113C as engaged portions are provided. Each of these notched grooves 113C is engaged with the bolts 27D and 28D of each of the brackets 27 and 28 fixed to the cover body 112, and the nut 30 is screwed with each of the bolts 27D and 28D. As a result, the air flow plate 113 is detachably mounted on the cover body 112.

As a result, the three openings 112C, 112D, and 112E formed in the cover body 112 can be covered from the inner surface 112G side by the air flow plate 113. The one opening 112E formed on the lowermost side is closed by the closing surface 113B of the air flow plate 113. On the other hand, the two openings 112C and 112D arranged on the upper side of the opening 112E are faced with each of the air flow holes 113A formed in the air flow plate 113. Therefore, it is configured that only the outside air having passed through the two openings 112C and 112D in the three openings 112C, 112D, and 112E formed in the cover body 112 is supplied to the heat exchanger (not shown) and the like through each of the air flow holes 113A of the air flow plate 113.

As described above, the left rear door cover 111 of the subtropical zone specification can be formed by mounting the air flow plate 113 in which the air flow holes 113A are provided only within the range corresponding to the two openings 112C and 112D in the cover body 112 and the range corresponding to the one opening 112E becomes the closing surface 113B.

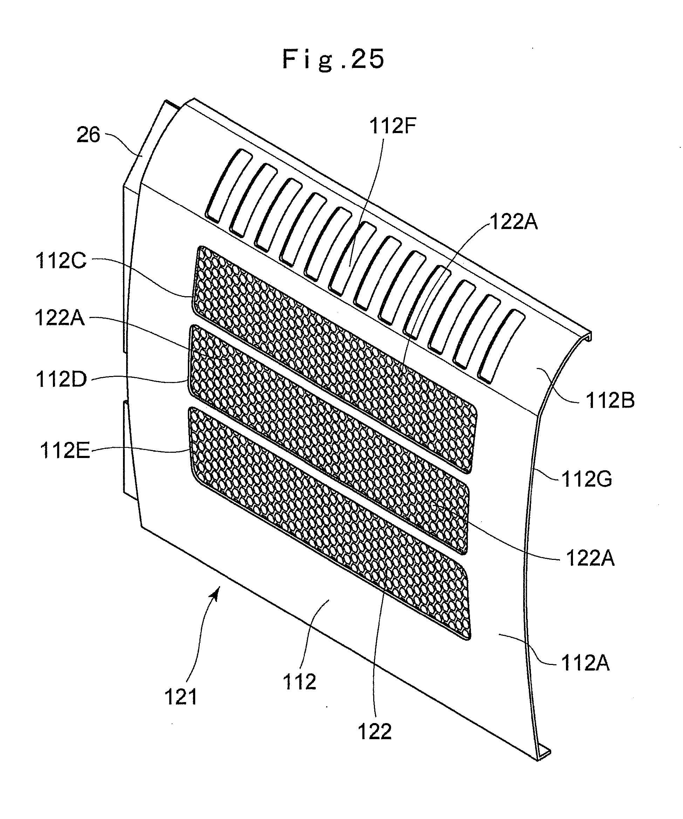

Subsequently, a case in which the exterior cover according to the fifth embodiment is applied to the left rear door cover of the tropical zone specification will be described by referring to Figs. 25 to 27.

Designated at 121 is the left rear door cover of the tropical zone specification according to the fifth embodiment, and the left rear door cover 121 is mounted on a hydraulic excavator operating in the tropical zone, for example. This left rear door cover 121 of the tropical zone specification is composed of the cover body 112 which is common with the left rear door cover 111 of the subtropical zone specification, the front and rear brackets 27 and 28, and an air flow plate 122 which will be described later.

Indicated at 122 is an air flow plate of the tropical zone specification as another air flow plate that can be detachably mounted on the cover body 112. This air flow plate 122 is formed of a rectangular flat plate body as a whole and has an area which can cover the three openings 112C, 112D, and 112E formed in the cover body 112. Here, on substantially the whole surface of the air flow plate 122, a large number of the air flow holes 122A are bored within a range corresponding to all the three openings 112C, 112D, and 112E formed in the cover body 112.

On the both end portions in the longitudinal direction of the air flow plate 122, (four) U-shaped notched grooves 122B as engaged portions are provided. Each of these notched grooves 122B is engaged with each of the bolts 27D and 28D of each of the brackets 27 and 28 fixed to the cover body 112, and the nut 30 is screwed with each of the bolts 27D and 28D. As a result, the air flow plate 122 is detachably mounted on the cover body 112.

As a result, the three openings 112C, 112D, and 112E formed in the cover body 112 can be covered from the inner surface 112G side by the air flow plate 122. Therefore, the outside air having passed through all the (three) openings 112C, 112D, and 112E formed in the cover body 112 is supplied to the heat exchanger (not shown) and the like through each of the air flow holes 122A of the air flow plate 122.

According to the fifth embodiment, the cover body 112 in which a certain number of (three) openings 112C, 112D, and 112E and the grill 112F are formed can be used as a common component. By mounting the air flow plate 113 in which the air flow holes 113A and the closing surface 113B are provided on this cover body 112, the left rear door cover 111 of the subtropical zone specification can be formed. Moreover, by mounting the air flow plate 122 in which the air flow holes 122A are provided on the whole surface thereof on the cover body 112, the left rear door cover 121 of the tropical zone specification can be formed.

Thus, according to the fifth embodiment, the cover body 112 in which the certain number of openings 112C, 112D, and 112E are formed can be made common between the left rear door cover 111 of the subtropical zone specification and the left rear door cover 121 of the tropical zone specification. By selectively mounting the air flow plate 113 of the subtropical zone specification and the air flow plate 122 of the tropical zone specification on this cover body 112, the plurality of types of the left rear door covers 111 and 121 according to the climate and the like of a zone where a hydraulic excavator operates can be formed. As a result, in manufacturing the plurality of types of the left rear door covers 111 and 121 and the like, the cover body 112 is communalized, and the number of components can be reduced, which contributes also to reduction of a manufacturing cost.

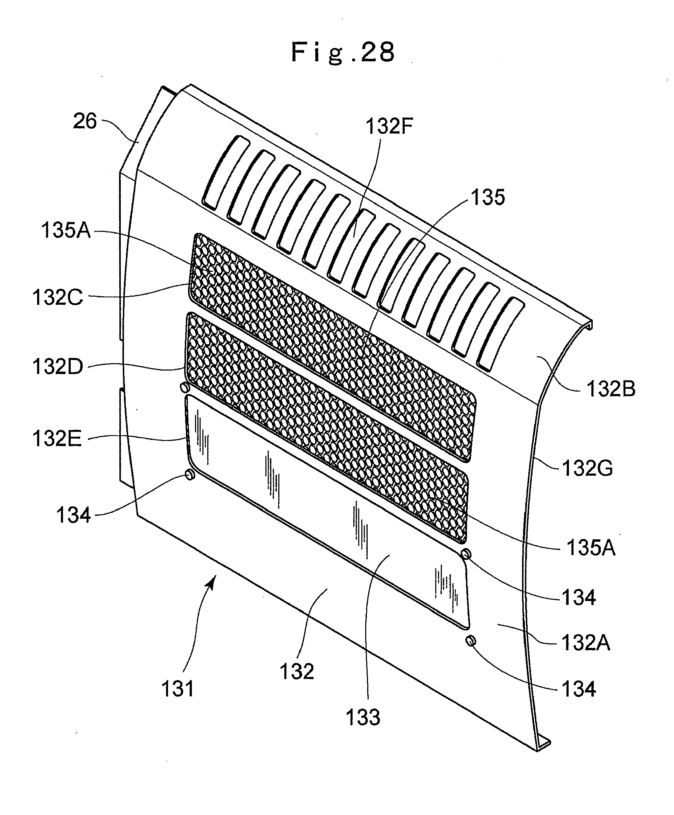

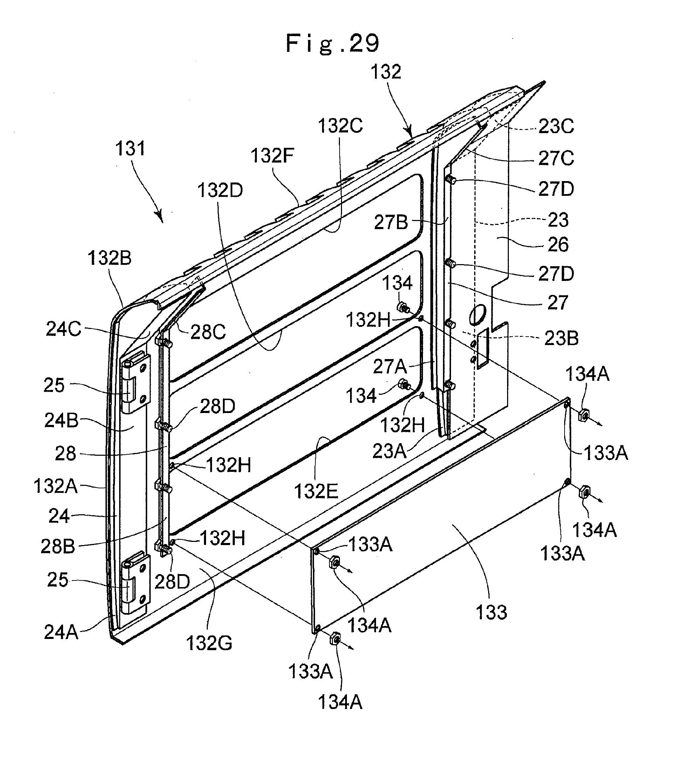

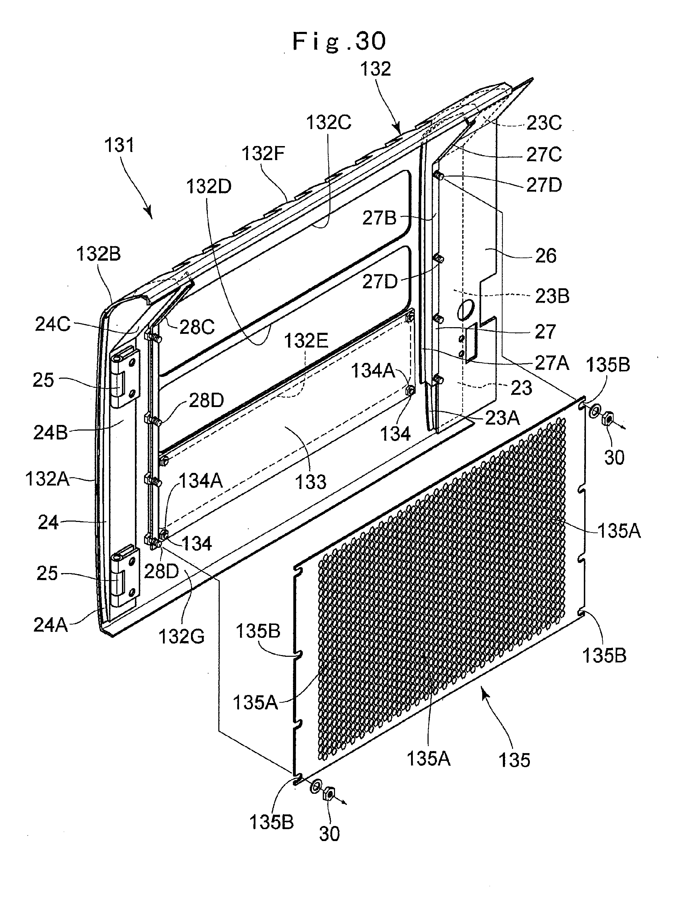

Next, Figs. 28 to 32 illustrate a sixth embodiment of the present invention. A characteristic of the sixth embodiment is that a closing plate which closes a part of the openings is selectively mounted on one type of a cover body for which the number of openings is prescribed, and one type of an air flow plate in which air flow holes are formed in a range corresponding to all the openings is mounted. In the sixth embodiment, the component elements that are identical to those of the foregoing first embodiment will be simply denoted by the same reference numerals to avoid repetitions of similar explanations.

First, a case in which an exterior cover according to the sixth embodiment is applied to a left rear door cover of the subtropical zone specification will be described by referring to Figs. 28 to 30.

Designated at 131 is a left rear door cover of the subtropical zone specification according to the sixth embodiment, and the left rear door cover 131 is mounted on the hydraulic excavator operating in the subtropical zone, for example. This left rear door cover 131 of the subtropical zone specification is composed of a cover body 132 which will be described later, front and rear brackets 27 and 28, a closing plate 133 which will be described later, and an air flow plate 135.

Indicated at 132 is a cover body which becomes a base of the left rear door cover 131. The cover body 132 includes a side plate section 132A extending in the front-and-rear direction and a curved plate section 132B having an arc shape extending diagonally upward from the upper end side of the side plate section 132A. In the side plate section 132A of the cover body 132, three openings 132C, 132D, and 132E are formed by being juxtaposed in the up-and-down direction, and a grill 132F is formed in the curved plate section 132B. To an inner surface 132G of the cover body 132, the front and rear reinforcement members 23 and 24, the flange plate 26, and brackets 27 and 28 are fixed and provided.

Indicated at 133 is a closing plate which closes the lowermost one opening 132E formed in the cover body 132. This closing plate 133 is made of a rectangular flat plate having an area that can cover the opening 132E, and a bolt through hole 133A is bored at each of the four corner parts of the closing plate 133.

In the vicinity of each of the corner parts of the opening 132E in the cover body 132, four bolt through holes 132H are drilled, and a bolt 134 is inserted into each of the bolt through holes 132H and each of the bolt through holes 133A of the closing plate 133. By screwing a nut 134A with each of the bolts 134, the closing plate 133 is mounted on the inner surface 132G of the cover body 132, and the one opening 132E is closed by this closing plate 133.

Indicated at 135 is the air flow plate detachably mounted on the cover body 132. This air flow plate 135 is made of a square plate body having an area that covers the three openings 132C, 132D, and 132E formed in the cover body 132. Here, a large number of air flow holes 135A are bored over a range corresponding to all the three openings 132C, 132D, and 132E formed in the cover body 132 on substantially the whole surface of the air flow plate 135.

On the both end portions in the longitudinal direction of the air flow plate 135, a plurality of U-shaped notched grooves 135B as engaged portions are provided at intervals in the up-and-down direction. Each of these notched grooves 135B is engaged with the bolts 27D and 28D of each of the brackets 27 and 28 fixed to the cover body 132, and by screwing the nut 30 with each of the bolts 27D and 28D, the air flow plate 135 is detachably mounted on the cover body 132.

As a result, the one opening 132E formed in the cover body 132 can be closed by the closing plate 133, and the other two openings 132C and 132D can be covered by the air flow plate 135. Therefore, it is configured such that outside air having passed through the two openings 132C and 132D is supplied to the heat exchanger (not shown) and the like through each of the air flow holes 135A of the air flow plate 135.

As described above, by mounting the air flow plate 135 in which the air flow holes 135A are formed over substantially the whole surface on the cover body 132 in which the three openings 132C, 132D, and 132E are formed in a state where the one opening 132E is closed by the closing plate 133, the left rear door cover 131 of the subtropical zone specification can be formed.

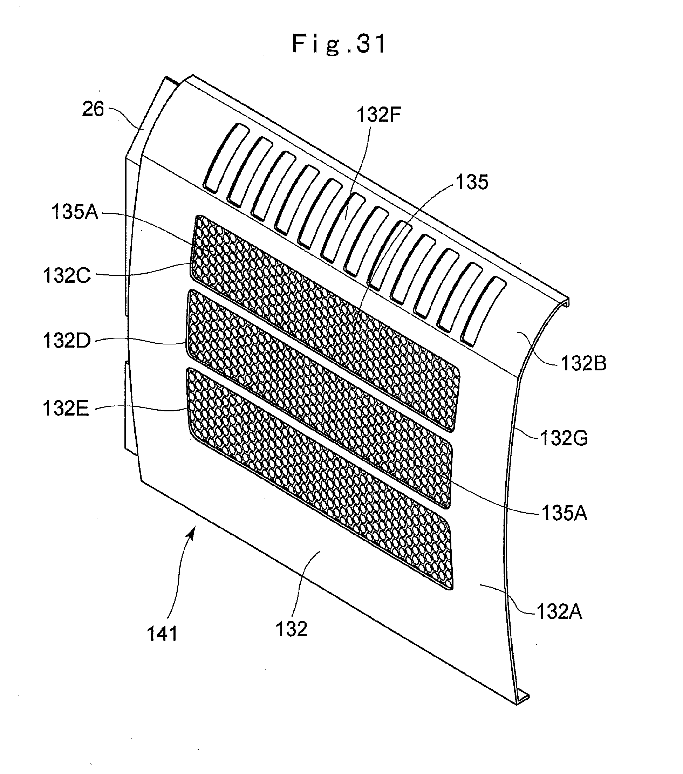

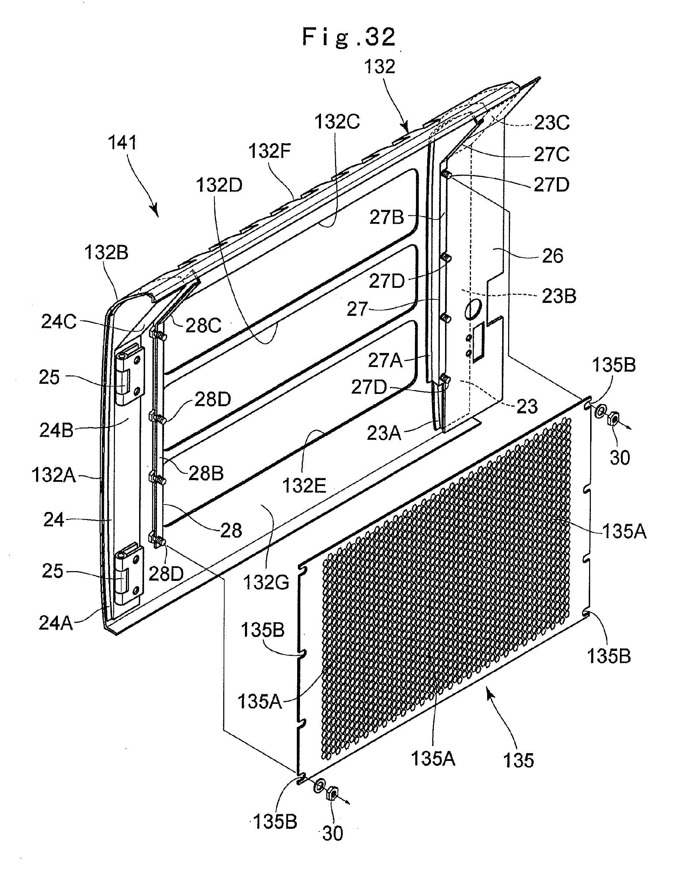

Subsequently, a case in which the exterior cover according to the sixth embodiment is applied to the left rear door cover of the tropical zone specification will be described by referring to Figs. 31 and 32.

Designated at 141 is the left rear door cover of the tropical zone specification according to the sixth embodiment, and the left rear door cover 141 is mounted on a hydraulic excavator operating in the tropical zone, for example. This left rear door cover 141 is composed of the cover body 132 which is common with the left rear door cover 131 of the subtropical zone specification, the front and rear brackets 27 and 28, and an air flow plate 135.

Here, since the left rear door cover 141 of the tropical zone specification takes in outside air through the three openings 132C, 132D, and 132E provided in the cover body 132, there is no need to close the opening 132E by the closing plate 133 as in the left rear door cover 131 of the subtropical zone specification.

Therefore, if the left rear door cover 141 of the tropical zone specification is to be formed, each of the notched grooves 135B of the air flow plate 135 is engaged with each of the bolts 27D and 28D of the front and rear brackets 27 and 28 fixed to the cover body 132. By screwing the nut 30 with each of the bolts 27D and 28D in this state, the air flow plate 135 can be mounted on the cover body 132.

As a result, the three openings 132C, 132D, and 132E formed in the cover body 132 can be covered by the air flow plate 135. Therefore, outside air having passed through the three openings 132C, 132D, and 132E is supplied to the heat exchanger (not shown) and the like through each of the air flow holes 135A of the air flow plate 135.

As described above, the left rear door cover 141 of the tropical zone specification can be formed by mounting only the air flow plate 135 in which the maximum number of the air flow holes 135A are formed over substantially the whole surface on the cover body 132.

Thus, according to the sixth embodiment, the cover body 132 and the air flow plate 135 are made common between the left rear door cover 131 of the subtropical zone specification and the left rear door cover 141 of the tropical zone specification. If the closing plate 133 and the air flow plate 135 are mounted on the cover body 132, the left rear door cover 131 of the subtropical zone specification can be formed. On the other hand, if only the air flow plate 135 is mounted on the cover body 132, the left rear door cover 141 of the tropical zone specification can be formed.

As described above, by selectively mounting the closing plate 133 that closes a part of the openings in the openings 132C, 132D, and 132E on the cover body 132, the plurality of types of the left rear door covers 131 and 141 according to the climate or the like of a zone where a hydraulic excavator operates can be formed. As a result, in manufacturing the plurality of types of the left rear door covers 131 and 141 and the like, the cover body 132 and the air flow plate 135 can be communalized, and the number of components can be further reduced, which contributes to further reduction of a manufacturing cost.

In the above-described first embodiment, the left rear door cover 21 is exemplified as the exterior cover. However, the present invention is not limited to the same, and a configuration may be widely adopted in the other covers such as the left front door cover 21, the top cover 14A, the engine cover 14B, the right door cover 14C and the like. The same also applies to the second, third, fourth, fifth, and sixth embodiments.

In the above-described first embodiment, the case in which the plate mounting front bracket 27 and the plate mounting rear bracket 28 are provided sandwiching each of the openings 22C and 22D of the cover body 22 is exemplified. However, the present invention is not limited to the same, and a configuration may be adopted in that the plate mounting brackets are provided on both the upper and lower sides sandwiching each of the openings 22C and 22D. The same also applies to the second, third, fourth, fifth, and sixth embodiments.

In the above-described first embodiment, the case in which the two openings 22C and 22D are provided in the side plate section 22A of the cover body 22 of the subtropical zone specification and the three openings 32C, 32D, and 32E are provided in the side plate section 32A of the cover body 32 of the tropical zone specification so that the number of the openings are made different between the cover bodies 22 and 32. However, the present invention is not limited to the same, and a configuration may be widely adopted in that the cover body of the subtropical zone specification and the cover body of the tropical zone specification have different opening shapes.

In the above-described third embodiment, the case in which the air flow plate mounted on the cover body 62 of the subtropical zone specification and the cover body 72 of the tropical zone specification are configured by the lower air flow plate 65 and the upper air flow plate 66 is exemplified. However, the present invention is not limited to the same, and a configuration may be widely adopted in that three or more air flow plates are used, for example.

Moreover, a hydraulic excavator is cited as an example of a construction machine in each of the above-described embodiments. However, the present invention is not limited to the same but can be widely applied to exterior covers of other construction machines such as a hydraulic crane, a wheel loader and the like, for example.

### DESCRIPTION OF REFERENCE NUMERALS

1: Hydraulic excavator (Construction machine)
2: Lower traveling structure (Vehicle body)
3: Upper revolving structure (Vehicle body)
8: Engine (Onboard equipment)
9: Heat exchanger (Onboard equipment)
21, 31, 41, 51, 61, 71, 81, 111, 121, 131, 141: Left rear door cover (Exterior cover)
22, 32, 42, 52, 62, 72, 82, 112, 132: Cover body 22C, 22D, 32C, 32D, 32E, 42C, 42D, 42E, 52C, 52D, 52E, 52F, 62C, 62D, 62E, 72C, 72D, 72E, 72F, 82C, 82D, 112C, 112D,
112E, 132C, 132D, 132E: Opening
22F, 32G, 42F, 52G, 62F, 72G, 82F, 112G, 132G: Inner surface
23: Front reinforcement member
24: Rear reinforcement member
27, 43, 63, 83: Plate mounting front bracket (Plate mounting bracket)
28, 44, 64, 84: Plate mounting rear bracket (Plate mounting bracket)
27D, 28D, 83D, 84D: Bolt (Mounting tool)
29, 45, 85, 113, 122, 135: Air flow plate
29A, 45C, 65A, 66A, 85A, 113A, 122A, 135A: Air flow hole 29B, 45D, 65B, 66B, 85B: Bend portion
29C, 45E, 65C, 66C, 85C, 113C, 122B, 135B: Notched groove (Engaged portion)
43D, 44C, 63D, 64C: Horizontal bolt (Mounting tool)
43E, 44D, 63E, 64D: Downward bolt (Mounting tool)
65: Lower air flow plate (Air flow plate)
66: Upper air flow plate (Air flow plate)
133: Closing plate

## Claims

1. An exterior cover for a construction machine, provided with a cover body provided on a vehicle body of said construction machine in order to cover onboard equipment including an engine mounted on said vehicle body and a plurality of openings provided in said cover body so that cooling air flows between the inside and the outside of said cover body, **characterized in that**;
a plate mounting bracket arranged on an inner surface located on said onboard equipment side of said cover body and an air flow plate formed of a plate body in which a large number of air flow holes are bored and arranged in a state covering each of said openings of said cover body by being detachably mounted on said plate mounting bracket.

2. The exterior cover for a construction machine according to claim 1, wherein said plate mounting brackets are provided on the both sides sandwiching each of said openings on an inner surface of said cover body, said air flow plate is mounted on each of these plate mounting brackets, respectively, and said cover body is reinforced by each of said plate mounting brackets and said air flow plate.

3. The exterior cover for a construction machine according to claim 1, wherein a reinforcement member is provided in said cover body on both end portions sandwiching each of said openings and along an inner surface of said cover body and each of said plate mounting brackets is provided by being juxtaposed between each of said reinforcement members and each of said openings.

4. The exterior cover for a construction machine according to claim 1, wherein each of said openings is arranged by being juxtaposed in the up-and-down direction, each of said plate mounting brackets is provided so as to extend in the up-and-down direction on the both sides sandwiching each of said openings, a plurality of mounting tools are provided in the up-and-down direction on each of said plate mounting brackets, and a plurality of engaged portions to be engaged with each of said mounting tools are provided on said air flow plate.

5. The exterior cover for a construction machine according to claim 1, wherein a bend portion for improving rigidity of said air flow plate is provided on said air flow plate.

6. The exterior cover for a construction machine according to claim 1, wherein a plurality of types of said cover bodies having different numbers of openings and/or shapes are prepared; and
said air flow plate is formed by one type of said air flow plate common to the plurality of types of said cover bodies.

7. The exterior cover for a construction machine according to claim 1, wherein said air flow plate is composed of a single plate body singularly covering each of said openings provided in said cover body or a plurality of plate bodies divided into upper and lower parts.

8. The exterior cover for a construction machine according to claim 1, wherein said cover body is composed of one type of said cover body for which the number of said openings is prescribed; and
said air flow plate is composed of a plurality of types of said air flow plates, that is, one air flow plate in which said air flow holes are formed only within a range corresponding to a part of said openings in all said openings of said cover body and another air flow plate in which said air flow holes are formed within a range corresponding to all said openings of said cover body.

9. The exterior cover for a construction machine according to claim 1, wherein said cover body is composed of one type of said cover body for which the number of said openings is prescribed;
said air flow plate is composed of one type of said air flow plate in which said air flow holes are formed within a range corresponding to all said openings of said cover body; and
a closing plate made of a member different from said air flow plate and closing a part of said openings in said openings is selectively mounted on said cover body.
